# EUROPÄISCHE PATENTSCHRIFT

(11) **EP 0 042 991 B1**
(45) Veröffentlichungstag und Bekanntmachung des Hinweises auf die Patenterteilung: **13.07.1983**
(21) Anmeldenummer: 81104263.9
(22) Anmeldetag: 03.06.1981
(51) Int. Cl.: C07C 125/06, C07C 155/02, A01N 47/10

(54) **Carbonylaminourethane und diese enthaltende Herbizide und Fungizide**
Carbonyl-amino-urethanes and herbicidal and fungicidal compositions containing them
Carbonylamino-uréthanes; herbicides et fongicides les contenant

(30) Priorität: 28.06.1980 DE 3024583
(43) Veröffentlichungstag der Anmeldung: 06.01.1982
(73) Patentinhaber: BASF Aktiengesellschaft, 67063 Ludwigshafen (DE)
(72) Erfinder: Schirmer, Ulrich, Dr., D-6900 Heidelberg (DE); Goetz, Norbert, Dr., D-6520 Worms (DE); Koenig, Karl-Heinz, Dr., D-6710 Frankenthal (DE); Wuerzer, Bruno, Dr., D-6701 Otterstadt (DE); Pommer, Ernst-Heinrich, Dr., D-6703 Limburgerhof (DE)

## Beschreibung

Die vorliegende Erfindung betrifft neue wertvolle Urethane, die eine Carbonylaminogruppe enthalten, Verfahren zur Herstellung dieser Urethane, Herbizide und Fungizide, welche diese Verbindungen enthalten, sowie Verfahren zur Bekämpfung von unerwünschtem Pflanzenwuchs und von Pilzen mit diesen Verbindungen.

Es ist bekannt, Ethyl-N-(3-(N'-phenyl-carbamoyloxy-)-phenyl)-carbamat und Methyl-N-(3-(N'-(3'-methylphenylcarbamoyloxy)-phenyl)-carbamat (DE-AS 1567151) als Herbizide zu verwenden.

Außerdem ist es bekannt, daß das Meta-(3,3-dimethylureido)-benzyl-N-(tert.-butyl)-carbamat herbizide Eigenschaften hat (US-PS 3 766 250).

Es ist ferner bekannt, das 1-[2-(2,4-Dichlorphenyl)-2-(2-propenyloxy)-ethyl]-imidazol als Fungizid zu verwenden (GB-PS 13 18 590).

Es wurde nun gefunden, daß Urethane der allgemeinen Formel 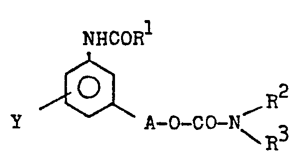 in der
R' gegebenenfalls durch Halogen oder Alkoxy oder Alkoxycarbonyl oder Cyan substituiertes Alkyl, Cycloalkyl, Alkenyl oder Alkinyl (z. B. Methyl, Ethyl, Isopropyl, n-Propyl, n-Butyl, sec.-Butyl, tert.-Butyl, iso-Butyl, sec.-Pentyl, Chlormethyl, a,a-Dichlorethyl, Dichlormethyl, Methoxymethyl, Acetoxymethyl, Cyanomethyl, Cyclopropyl, Cyclohexyl, a-Methyl-cyclopropyl, sec.-Propenyl, Ethinyl) oder Alkoxy (z. B. Methoxy. Ethoxy, n-Propoxy, iso-Propoxy, tert.-Butoxy, sec.-Butoxy), Cycloalkoxy (z. B. Cyclohexyloxy, Cyclopentylmethoxy), Alkenyloxy (z. B. Propenoxy), Alkinyloxy (z. B. sec.-Butinoxy), Cyanalkoxy (2-Cyanethoxy), Halogenalkoxy (2-Chlorethoxy, 1,3-Difluor-iso-propoxy), Alkylthio (Methylthio, Ethylthio, n-Propylthio, t-Butylthio), Alkenylthio oder Alkinylthio bedeutet,
Y Wasserstoff, Alkyl (z. B. Methyl, t-Butyl), Halogen (z. B. Fluor, Chlor, Brom), Alkoxy (z. B. Methoxy) oder Halogenalkyl (z. B. Trifluormethyl) bedeutet,
A einen gegebenenfalls durch Alkyl substituierten Alkylenrest z. B. mit 1 bis 8 Kohlenstoffatomen (z. B. Methylen, Methylmethylen, Dimethylmethylen, Ethylmethylen, Propylen, Hexylen, Ethylen, Methylethylen, Methylpropylen, Ethylpropylen, Methylpentylen, Dimethylpropylen) bedeutet,
R² Wasserstoff, Alkyl (z. B. Methyl, Ethyl, iso-Propyl), Alkoxyalkyl (z. B. Methoxymethyl, 2-Methoxyethyl), Halogenalkyl (z. B. Chlormethyl) oder gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl (z. B. Methyl, Ethyl, 2-Chlorethyl, 2-Methoxyethyl, Benzyl, Isopropyl, n-Propyl, 4-Chlorbenzyl, n-Butyl, sec.-Butyl, tert.-Butyl, iso-Butyl, 2,4-Dichlorbenzyl, a-Methyl-2-chlorbenzyl, 2-Ethylhexyl, n-Decyl) oder gegebenenfalls durch Halogen substituiertes Alkenyl (z. B. Allyl, 2-Chlorpro- pen(1)yl(3), Buten(1)yl(3)) oder gegebenenfalls durch Halogen oder Alkoxy substituiertes Alkinyl (z. B. Propargyl, Butin(1)yl(3), 3-Methylbutin-1-yl-3) oder gegebenenfalls durch Alkyl substituiertes Cycloalkyl (z. B. Cyclopentyl, Cyclohexyl, 3-Methylcyclohexyl, 2,6-Dimethylcyclohexyl, Cycloheptyl, 4-tert.-Bu- tylcyclohexyl, Cyclooctyl, Cyclododecyl, 3,5-Dimethylcyclohexyl), Phenyl oder einen ein- oder mehrfach substituierten Phenylrest bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-C-R⁴, NHCOOR⁴, 0 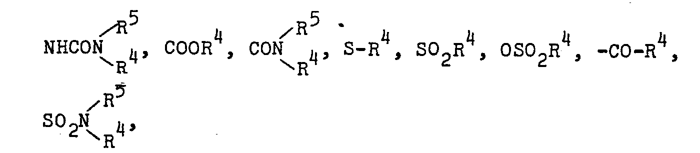 (z. B. Phenyl, 4-Fluorphenyl, ₂-Methoxyphenyl
   3-Methylphenyl, 2-Fluorphenyl, 3-Methyl-5-iso-propylphenyl,
   3-Ethylphenyl, 3-Chlorphenyl, 2,4,6-Trimethylphenyl,
   3-Fluorphenyl, 3-Chlor-4-fluorphenyl, 3,4-Dimethylphenyl,
   3-Trifluormethylphenyl, 4-Methylphenyl, 3,4-Difluorphenyl,
   3-Chlor-4-methylphenyl, 4-Bromphenyl, 4₋Jodphenyl, 4-Chlorphenyl, 2-Chlorphenyl, 2-Chlor-4-fluorphenyl, 3-Isopropylphenyl, 4-Ethylphenyl, 3-Methoxycarbonylaminophenyl,
   4-Ethoxyphenyl, 2-Methylphenyl, 3-Methoxyphenyl, 4-Cyanophenyl, 2,6-Dimethylphenyl, 2,4-Dichlorphenyl, 3-Methyl-4-chlorphenyl, 3,4-Dichlorphenyl, 3-Chlor-4-bromphenyl,
   3-Trifluormethyl-4-chlorphenyl, 3-Chlor-4-difluormethoxyphenyl, 3-(1,1,2,2-Tetrafluorethoxy)-phenyl, 3,4-Dichlor-5-methylphenyl), wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat, eine gute herbizide Wirkung gegen unerwünschte Pflanzen und gleichzeitig eine gute Verträglichkeit bei Kulturpflanzen haben. Die neuen Verbindungen haben außerdem eine fungizide Wirkung. Sie eignen sich daher für die Anwendung als Pflanzenschutzmittel.

### Die neuen Verbindungen können beispielsweise nach folgendem Verfahren hergestellt werden : Verfahren I :

Hydroxyverbindungen der allgemeinen Formel 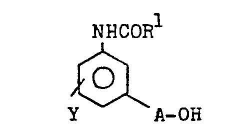 werden mit Isocyanaten der allgemeinen Formel R³⁻NCO umgesetzt, wobei R', R³, Y und A die oben genannten Bedeutungen haben, und die neuen Verbindungen (R² = H) entstehen. Diese Reaktion erfolgt mit oder ohne einen für Isocyanatreaktionen gebräuchlichen Katalysator, z. B. tert. Amine (Triethylamin, 1,4-Diazabicyclo-(2,2,2)-octan), stickstoffhaltige Heterocyclen (Pyridin, 1,2-Dimethylimidazol) oder organische Zinnverbindungen (Dibutylzinndiacetat, Dimethylzinndichlorid) gegebenenfalls in einem unter den Reaktionsbedingungen inerten Lösungsmittel, z. B. Kohlenwasserstoffe (Ligroin, Benzin, Toluol, Pentan, Cyclohexan), Halogenkohlenwasserstoffe (Methylenchlorid, Chloroform, Dichlorethan, Chlorbenzol, o-, m- oder p-Dichlorbenzol), Nitrokohlenwasserstoffe (Nitrobenzol, Nitromethan), Nitrile (Acetonitril, Butyronitril, Benzonitril), Ether (Diethylether, Tetrahydrofuran, Dioxan), Ester (Essigsäureethylester, Propionsäuremethylester), Ketone (Aceton, Methylethylketon) oder Amide (Dimethylformamid, Formamid) bei Temperaturen im Bereich von 0 bis 150 °C, vorzugsweise im Bereich von 40bis100°C.

(S. Petersen in Methoden der Org. Chemie, Band VIII, S. 131, Georg-Thieme-Verlag, Stuttgart, 4 Auflage (1952)).

### Verfahren II:

Ein Anilin der allgemeinen Formel 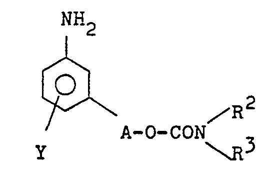 in der Y, A, R² und R³ die obengenannten Bedeutungen haben, wird mit einer Verbindung der allgemeinen Formel 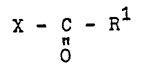 in der X eine Austrittsgruppe (z. B. Chlor, Brom oder 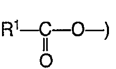 bedeutet und R¹ die obengenannte Bedeutung hat, in einem geeigneten Lösungsmittel, z. B. Wasser, Alkohole (Methanol, Ethanol, Isopropanol) oder wie unter Verfahren I angegeben, unter Zuhilfenahme eines üblichen Säurebinders, z. B. Alkalihydroxide, -carbonate, -hydrogencarbonate, Erdalkalioxide, -hydroxide, -carbonate, -hydrogencarbonate, oder tertiäre organische Basen (z. B. Triethylamin, Pyridin, N,N-Dimethylanilin, N,N-Dimethylcyclohexylamin, Chinolin, Tributylamin), bei Temperaturen von - 20 bis 150°C, vorzugsweise im Bereich von 20 bis 80 °C umgesetzt (DE-OS 16 43 763).

### Verfahren III :

Ein Chlorkohlensäureester der allgemeinen Formel 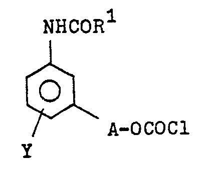 in der A, Y und R' die oben angegebenen Bedeutungen haben wird mit einem Amin der allgemeinen R² Formel 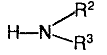 wobei R¹, R², R³, Y und A die obengenannten Bedeutungen haben, unter Bedingungen wie in Verfahren II umgesetzt.

Zur Herstellung der im Verfahren I benötigten Hydroxyverbindungen bringt man Aniline der allgemeinen Formel 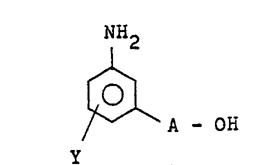 in der Y und A die oben genannten Bedeutungen haben, mit einer Verbindung der allgemeinen Formel 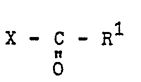 in der X eine Austrittsgruppe (z. B. Chlor, Brom oder 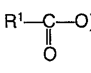 bedeutet und R' die obengenannte Bedeutung hat, gemäß den im Verfahren II beschriebenen Bedingungen zur Reaktion.

Aniline der allgemeinen Formel (Y und A siehe oben) 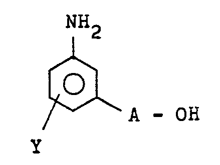 erhält man durch die Reduktion von Nitroverbindungen der allgemeinen Formel 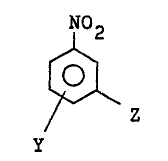 in der Y die oben genannte Bedeutung hat und Z einen gegebenenfalls durch Alkyl substituierten Hydroxy- oder Carbonylalkyl- oder -alkenyl-Rest bedeutet (GB-PS758,993, US-PS 2 680 136, US-PS 4 021 487).

Die für das Verfahren II benötigten Aniline erhält man durch Reaktion von 3-(Hydroxyalkyl)-nitrobenzolen mit Isocyanaten und anschließender Reduktion der so erhaltenen Nitrourethane.

Die Chlorkohlensäureester, die im Verfahren III zur Anwendung kommen, erhält man durch Phosgenierung der im Verfahren I eingesetzten Hydroxyverbindungen.

Die folgenden Vorschriften und Beispiele erläutern die Herstellung der neuen Urethane und ihrer Vorprodukte.

### Vorschrift A

### m-(1-Hydroxypropyl)-anilin

150 Gew.-Teile m-Nitropropiophenon in 1 500 Vol.-Teilen Tetrahydrofuran (THF) gelöst, werden mit 60 Gew.-Teilen Raney-Nickel versetzt und in einem 2,5-Liter Hydrierautoklaven bei 70 °C und 50 bar Wasserstoffdruck bis zur Druckkonstanz hydriert. Das Reaktionsprodukt wird filtriert, das Filtrat vom Lösungsmittel befreit und der Rückstand aus Petrolether umkristallisiert. Hierbei erhält man 109 Gew.-Teile einer Verbindung vom Schmelzpunkt 69 °C und folgender Strukturformel :

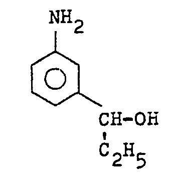

### Vorschrift B

### 3-(1-Hydroxyethyl)-phenylpropionamid

103 Gew.-Teile 3-Amino-a-methylbenzylalkohol werden in 600 Gew.-Teilen THF gelöst und mit 84 Gew.-Teilen NaHC0₃ versetzt. Man tropft langsam 69,4 Gew.-Teile Propionylchlorid zu, läßt über Nacht rühren, filtriert ab, engt die Lösung ein und kristallisiert den Rückstand aus Toluol/Cyclohexan um. So erhält man 110 Gew.-Teile einer weißen Verbindung vom Schmelzpunkt 77 bis 79 °C mit folgender Strukturformel :

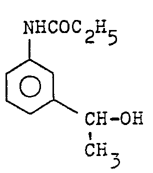

Nach diesem Verfahren lassen sich beispielsweise folgende Verbindungen synthetisieren :

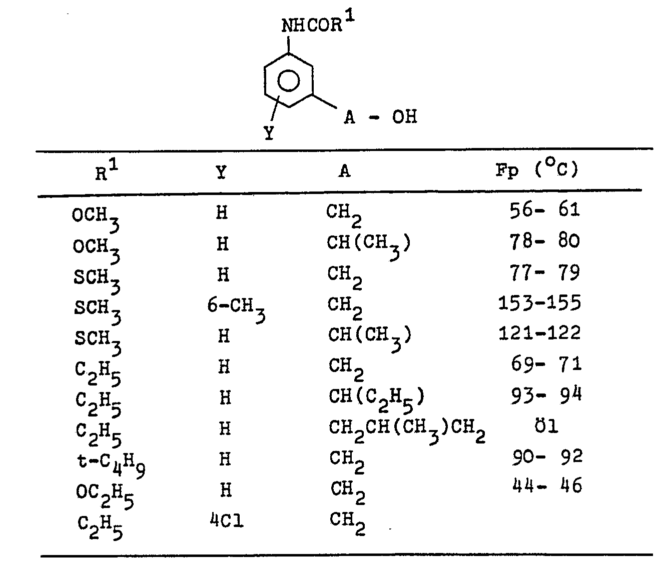

### Vorschrift C

### O-(3-Nitrobenzyl)-N-(3,4-dichlorphenyl)-urethan

100 Gew.-Teile 3-Nitrobenzylalkohol werden in 500 Gew.-Teilen THF gelöst, mit 3 Tropfen Dibutylzinndiacetat und 123 Gew.-Teilen 3,4-Dichlorphenylisocyanat versetzt, über Nach gerührt, eingeengt und mit Toluol verrührt. Nach dem Absaugen und Trocknen erhält man 155 Gew.-Teile einer weißen Verbindung vom Schmelzpunkt 182-184 °C und folgender Strukturformel :

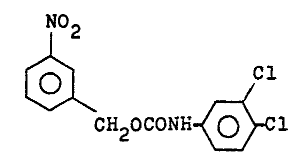

Analog erhält man beispielsweise
O-(3-Nitrobenzyl)-N-(3-trifluormethylphenyl)-urethan Fp. 97-99 °C,
O-(3-Nitrobenzyl)-N-(3-chlorphenyl)-urethan Fp. 123-125 °C.

### Vorschrift D

### 0-(3-Aminobenzyl)-N-(3,4-dichlorphenyl)-urethan

Zu einer Suspension aus 155 Gew.-Teilen O-(3-Nitrobenzyl)-N-(3,4-dichlorphenyl)-urethan in 1 100 Vol.-Teilen Alkohol und 100 Vol.-Teilen konz. Salzsäure gibt man 440 Gew.-Teile Zinn-II-chlorid und läßt 4 Tage bei 20 °C rühren. Danach wird unter guter Kühlung die Mischung mit konz. Natronlauge stark alkalisch gestellt und abgesaugt. Der Rückstand wird mehrmals mit THF ausgerührt. Die vereinigten, getrockneten THF-Lösungen werden eingeengt und das zurückbleibende Rohprodukt aus Toluol/Essigester umkristallisiert. Man erhält 130 Gew.-Teile weißer Kristalle vom Schmelzpunkt 138 bis 140 °C mit folgender Strukturformel :

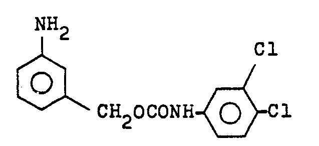

Analog erhält man beispielsweise
O-(3-Aminobenzyl)-N-(3-trifluormethylphenyl)urethan Öl
O-(3-Aminobenzyl)-N-(3-chlorphenyl)-urethan Fp. 111-113 °C.

### Vorschrift E

### N-[3-(Chlorcarbonyloxymethyl)-phenyl]-0-methylurethan

Eine Lösung aus 54 Gew.-Teilen N-(3-Hydroxymethylphenyl)-O-methylurethan und 23,7 Gew.-Teilen Pyridin in 300 Vol.-Teilen Methylenchlorid wird innerhalb von 3 Stunden bei - 20 °C langsam zu einer Mischung von 45 Gew.-Teilen Phosgen in 50 Vol.-Teilen Methylenchlorid getropft. Man läßt 2 Stunden bei - 10 °C nachrühren, versetzt mit 400 ml Eiswasser, trennt die organische Phase ab, trocknet über Natriumsulfat und engt nach dem Filtrieren bei 20 °C im Vakuum ein. Man erhält 48 g eines zähen Öls, dem lt. IR- und NMR-Spektroskopie folgende Struktur zukommt :

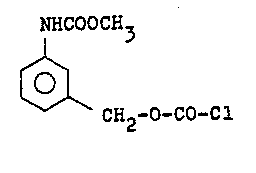

### Beispiel 1

10 Gew.-Teile N-(3-Hydroxymethylphenyl)-0-methylurethan werden in 100 Gew.-Teilen THF mit 6,6 Gew.-Teilen Phenylisocyanat und einigen Tropfen Triethylamin versetzt. Nach zweitägigem Stehen wird eingeengt und aus Toluol umkristallisiert. Man erhält 13,8 Gew.-Teile weiße Kristalle vom Schmelzpunkt 139-141 °C und folgender Strukturformel (Wirkstoff Nr. 1)

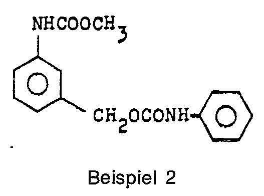

24,9 Gew.-Teile O-(3-Aminobenzyl)-N-3,4-dichlorphenyl)-urethan werden in 200 Gew.-Teilen THF gelöst, mit 9,6 Gew.-Teilen NaHCO₃ und dann mit 8,4 Gew.-Teilen Cyclopropancarbonsäurechlorid versetzt. Nach 8-stündigem Rühren wird filtriert, eingeengt und der Rückstand mit Cyclohexan verrieben und abgesaugt. So erhält man 27,9 Gew.-Teile einer Verbindung vom Schmelzpunkt 163-165 °C und folgender Struktur (Wirkstoff Nr. 2)

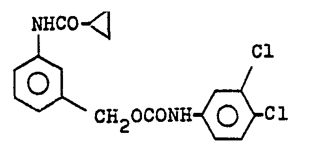

### Beispiel 3

28 Gew.-Teile N-[3-(Chlorcarbonyloxymethyl)-phenyl]-O-methylurethan werden in 50Gew.-Teilen Toluol gelöst. Man tropft bei 20 °C 31 g 3-Chlor-N-methylanilin in 150 Gew.-Teilen Toluol zu und läßt 8 Stunden rühren. Die Reaktionslösung wird 3 mal mit verdünnter Salzsäure ausgeschüttelt. Die Lösung wird getrocknet und eingeengt. Das verbleibende Öl wird mit Petrolether zum Kristallisieren gebracht und abgesaugt. Man erhält weiße Kristalle vom Schmelzpunkt 64-67 °C und folgender Strukturformel (Wirkstoff Nr. 3)

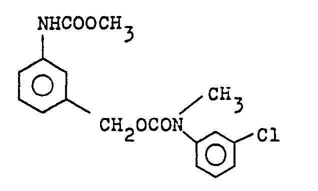

Auf entsprechende Weise lassen sich die nachfolgenden Verbindungen herstellen :

### (Siehe die Tabelle Seite 8)

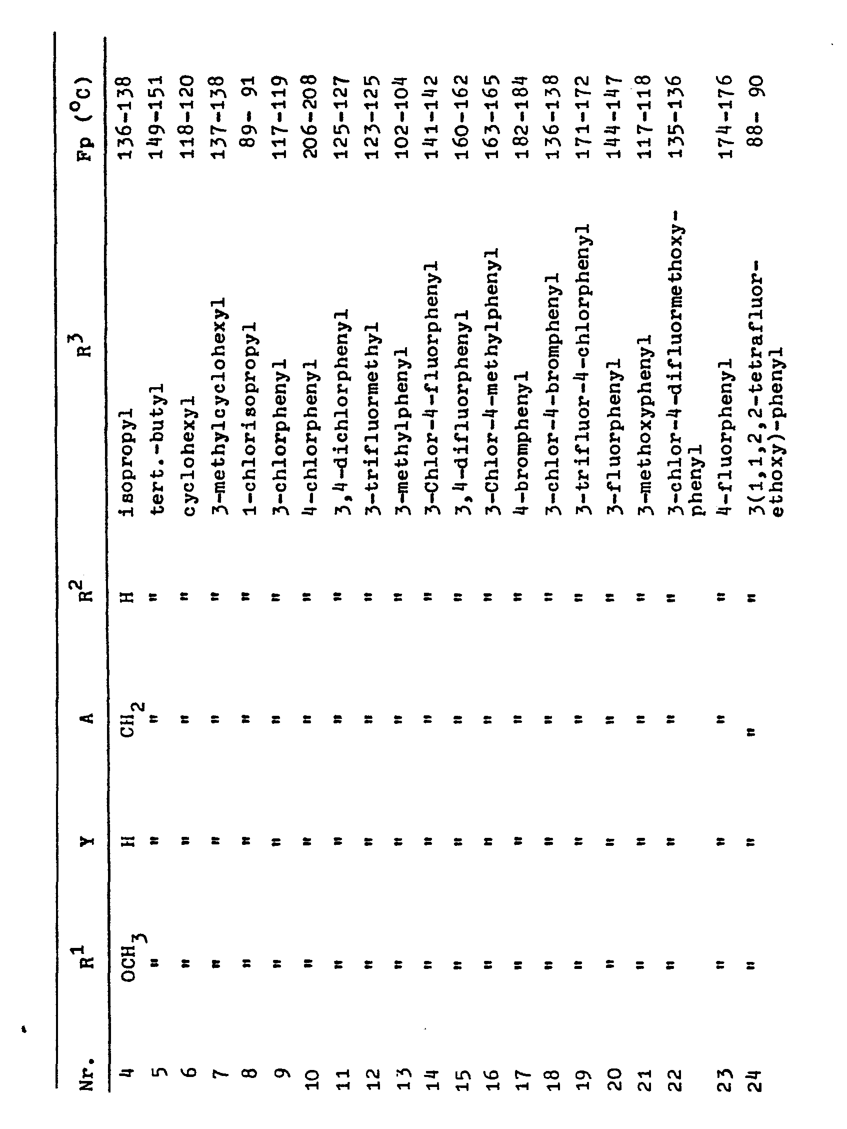

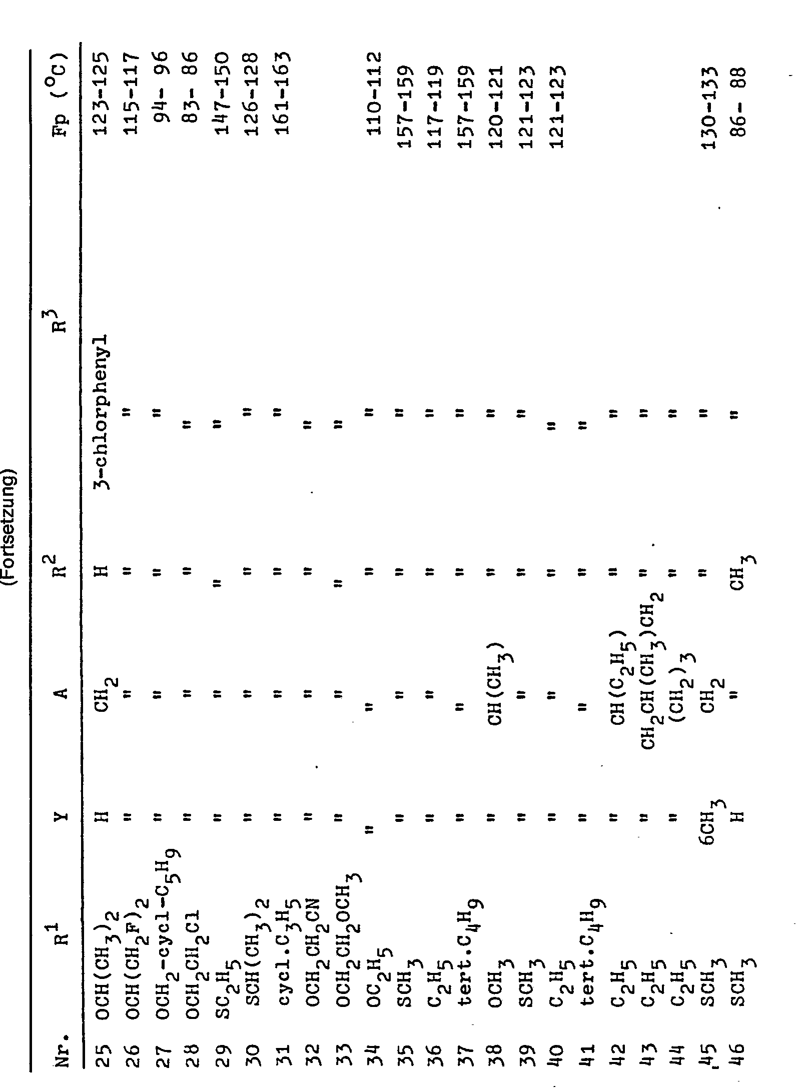

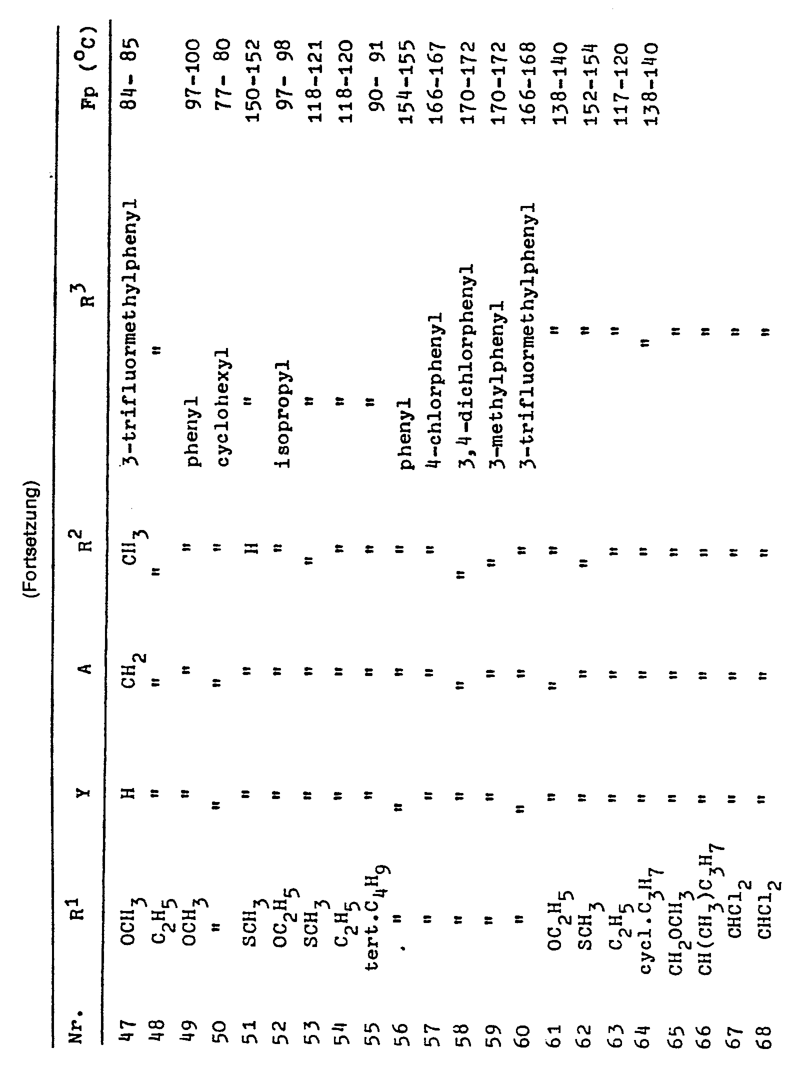

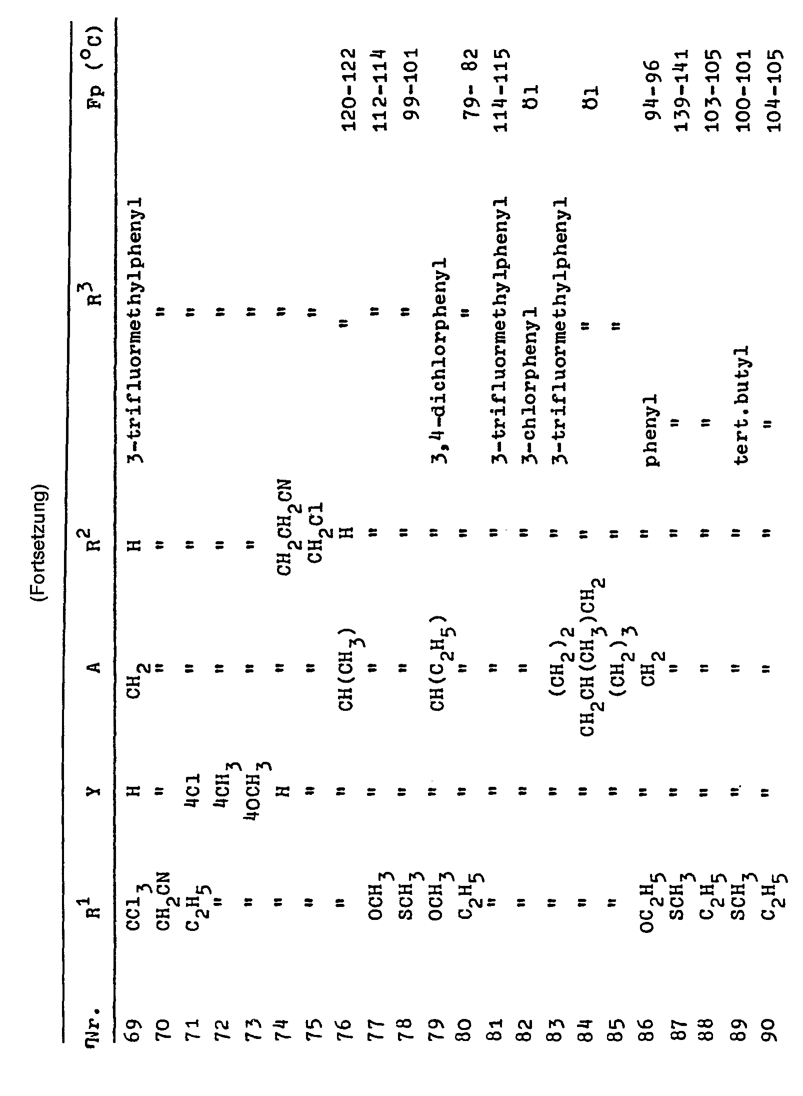

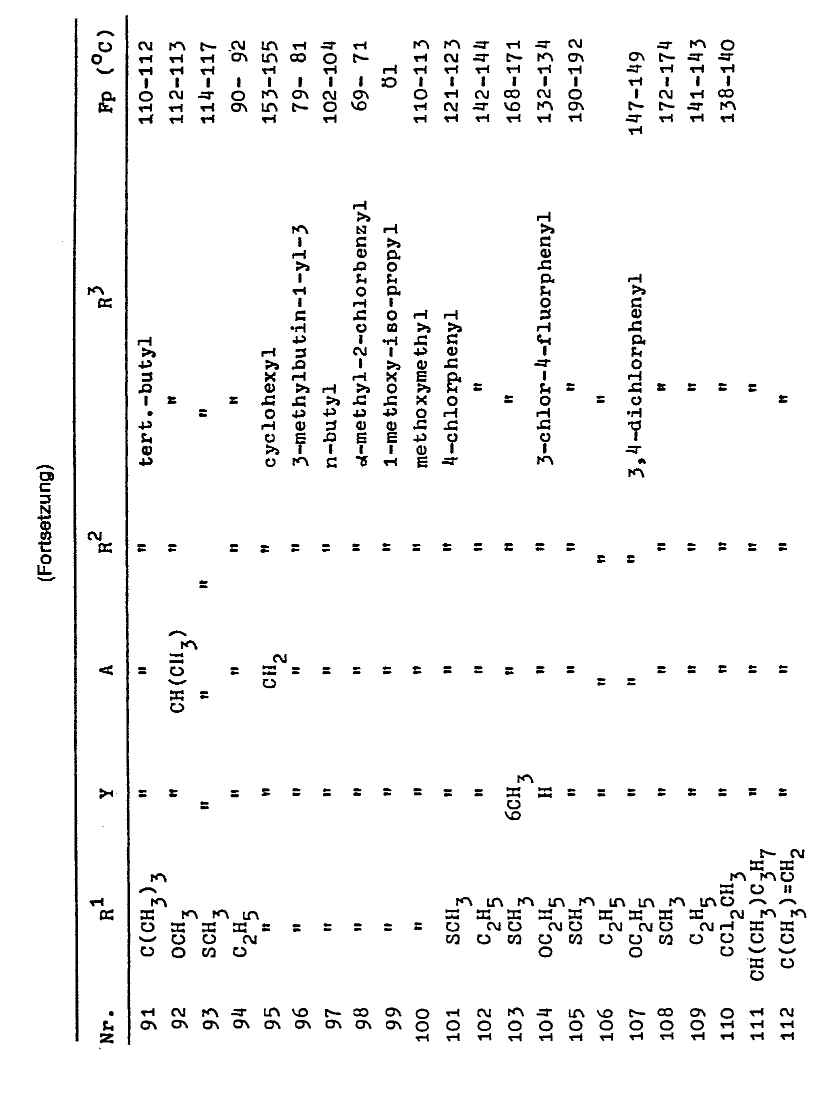

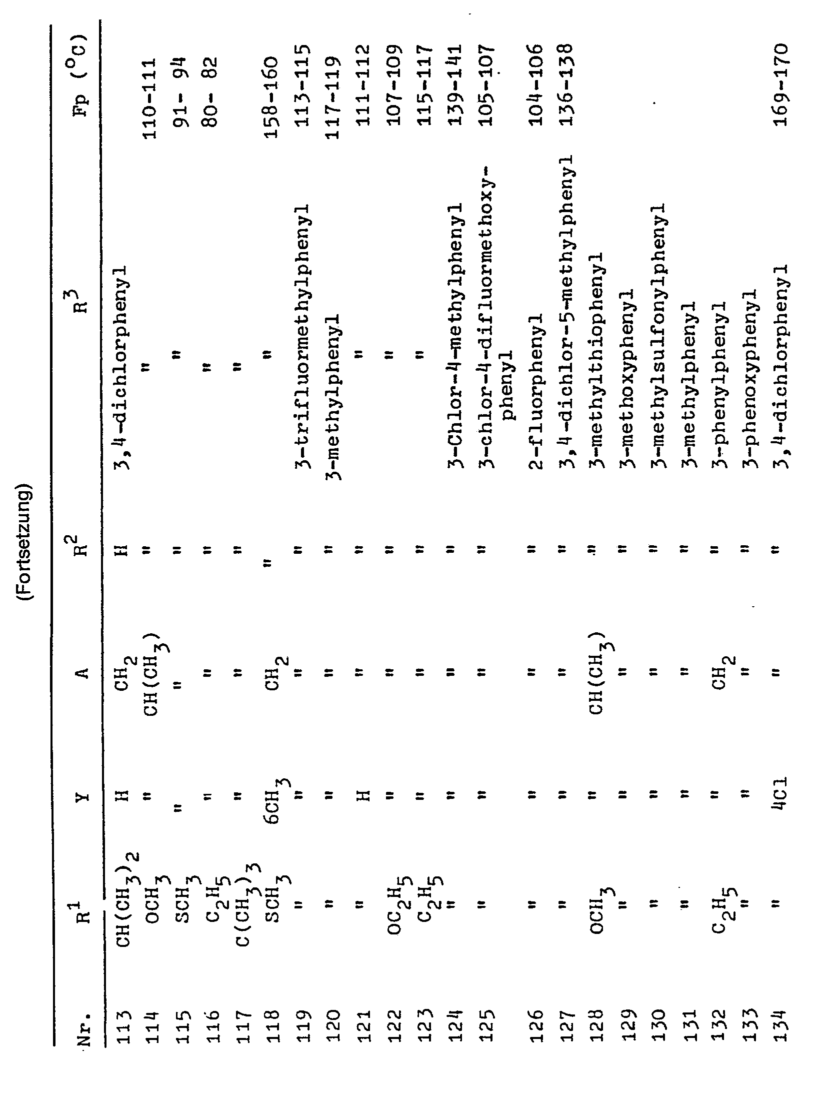

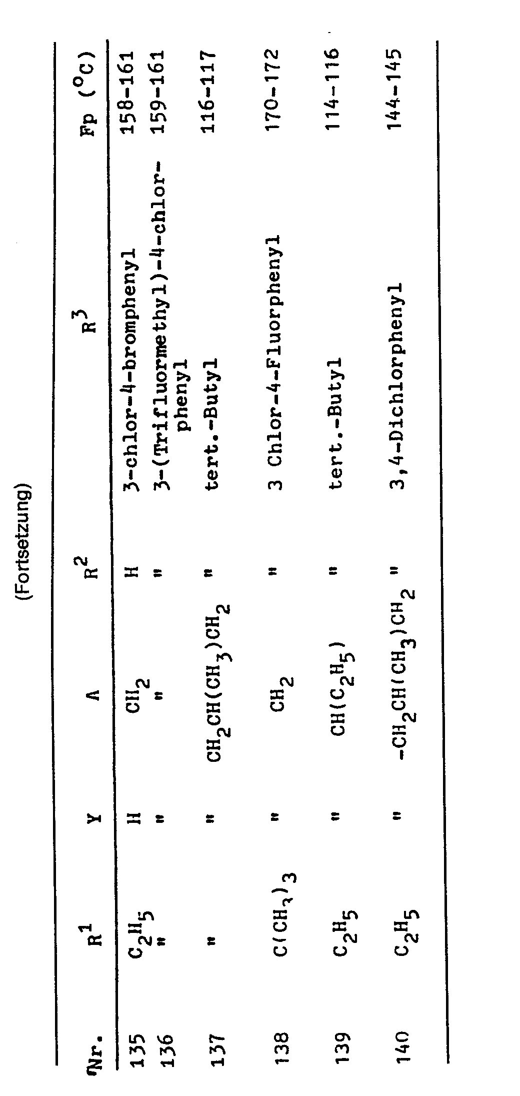

Die Wirkstoffe können als solche, in Form ihrer Formulierungen oder den daraus bereiteten Anwendungsformen, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen, Beizen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten. Die Mittel enthalten im allgemeinen 0,1 bis 95 % (Gew.-%), insbesondere 10 bis 80% Wirkstoff.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und ,Erdalkalisalze der Dibutylnaphthalinsulfonsäure, Laurylethersulfat, Fettalkoholsulfate, fettsaure Alkali-und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

### Beispiel I

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

### Beispiel 11

10 Gewichtsteile der Verbindung 2 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

### Beispiel III

20 Gewichtsteile der Verbindung 2 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

### Beispiel IV

20 Gewichtsteile der Verbindung 3 werden in einer Mischung gelöst, die aus 25 Gewichtsteilen Cyclohexanon, 65 Gewichtsteilen einer Mineralölfraktion vom Siedepunkt 210 bis 280 °C und 10 Gewichtsteilen des Anlagerungsproduktes von 40 Mol Ethylenoxid an t Mol Ricinusöl besteht.

### Beispiel V

80 Gewichtsteile des Wirkstoffs 1 werden mit 3 Gewichtsteilen des Natriumsalzes der Dilsobutylnaphthalin-alpha-sulfonsäure, 10 Gewichtsteilen des Natriumsalzes einer Ligninsulfonsäure aus einer Sulfit-Ablauge und 7Gewichtsteilen pulverförmigem Kieselsäuregel- gut vermischt und in einer Hammermühle vermahlen.

### Beispiel VI

5 Gewichtsteile der Verbindung 1 werden mit 95 Gewichtsteilen feinteiligem Kaolin innig vermischt. Man erhält auf diese Weise ein Stäubemittel, das 95 Gewichtsprozent des Wirkstoffs enthält.

### Beispiel VII

30 Gewichtsprozent der Verbindung 1 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

### Beispiel VIII

40 Gewichtsteile des Wirkstoffs 1 werden mit 10 Teilen Natriumsalz eines Phenolsulfonsäureharnstoff-formaldehyd-kondensats, 2 Teilen Kieselgel und 48 Teilen Wasser innig vermischt. Man erhält eine stabile wäßrige Dispersion.

### Beispiel IX

20 Teile des Wirkstoffs 1 werden mit 12 Teilen Calciumsalz der Dodecylbenzolsulfonsäure, 8 Teile Fettalkoholpolyglykolether, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

Der Einfluß von Vertretern der neuen herbiziden Urethane auf das Wachstum von erwünschten und unerwünschten Pflanzen wird anhand von Gewächshausversuchen vorgeführt :
Als Kulturgefäße dienten Plastikblumentöpfe mit 300 cm³ Inhalt und lehmigem Sand mit etwa 1,5 % Humus als Substrat. Die Samen der Testpflanzen wurden nach Arten getrennt flach eingesät. Unmittelbar danach erfolgte bei Vorauflaufbehandlung das Aufbringen der Wirkstoffe auf die Erdoberfläche. Sie wurden hierbei in Wasser als Verteilungsmittel suspendiert oder emulgiert und mittels fein verteilender Düsen gespritzt. Bei dieser Applikationsmethode handelt es sich um eine Aufwandmenge entsprechend 3,0 kg Wirkstoff/ha. Nach dem Aufbringen der Mittel wurden die Gefäße leicht beregnet, um Keimung und Wachstum in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die Wirkstoffe beeinträchtigt wurde. Als Vergleichsmittel diente bei dieser Anwendungsmethode Meta-(3,3-dimethylureido)-benzyl-N-(tert.-butyl)-carbamat (A) in der gleichen Aufwandmenge.

Zum Zwecke der Nachauflaufbehandlung zog man die Testpflanzen je nach Wuchsform erst bis zu einer Wuchshöhe von 3 bis 10 cm an und behandelte sie danach. Zur Nachauflaufbehandlung wurden entweder direkt gesäte und in den gleichen Gefäßen aufgewachsene Pflanzen ausgewählt, oder sie wurden erst als Keimpflanzen getrennt angezogen und einige Tage vor der Behandlung in die Versuchsgefäße verpflanzt. Die Aufwandmengen für die Nachauflaufbehandlung variiert je nach Wirkstoff. Sie betrugen im Einzelfall 0,25 oder 0,5 oder 1,0 oder 2,0 kg Wirkstoff/ha. Als Vergleichsmittel wurden die bekannten Wirkstoffe Methyl-N-(3-(N'-3-methyl-phenylcarbamoyloxy)-phenyl)-carbamat (B) zu 0,25, 0,5 und 1,0 kg/ha und Ethyl-N-(3-N'-phenylcarbamoyloxy-)phenyl-carbamat (C) zu 2,0 kg/ha gewählt. Eine Abdeckung unterblieb bei der Nachauflaufbehandlung. Die Aufstellung der Versuche erfolgte im Gewächshaus, wobei für wärmeliebende Arten wärmere Bereiche (20 bis 35 °C) und für solche gemäßigter Klimate 10 bis 25 °C bevorzugt wurden. Die Versuchsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Ablauf und 100 kein Aufgang der Pflanzen bzw. völlige Zerstörung zumindest der oberirdischen Teile.

Die Ergebnisse zeigen, daß bei Nachauflaufanwendung die Verbindungen bei einer Reihe von unerwünschten Pflanzen eine bessere herbizide Aktivität haben als die Vergleichsmittel. Daneben gibt es einige erfindungsgemäße Verbindungen, welche darüberhinaus auch eine günstigere Verträglichkeit gegenüber bestimmten Kulturpflanzen aufweisen. Bei Vorauflaufanwendung wird ebenfalls eine herbizide Wirkung beobachtet.

Sind gewisse Kulturpflanzen gegenüber den Wirkstoffen etwas empfindlich, so können auch Ausbringungstechniken angewandt werden, bei welchen die herbiziden Mittel mit Hilfe der Spritzgeräte so geleitet werden, daß die Blätter empfindlicher Kulturpflanzen nach Möglichkeit nicht getroffen werden, während sie auf die Blätter darunter wachsender unerwünschter Pflanzen oder die unbedeckte Bodenfläche gelangen (post-directed, lay-by). In Anbetracht der guten Verträglichkeit und der Vielseitigkeit der Applikationsmethoden können die erfindungsgemäßen Herbizide noch in einer weiteren großen Zahl von Kulturpflanzen zur Beseitigung unerwünschten Pflanzenwuchses eingesetzt werden. Die Aufwandmengen können dabei zwischen 0,1 und 15 kg/ha und mehr schwanken.

In Betracht kommen beispielsweise folgende Kulturen :

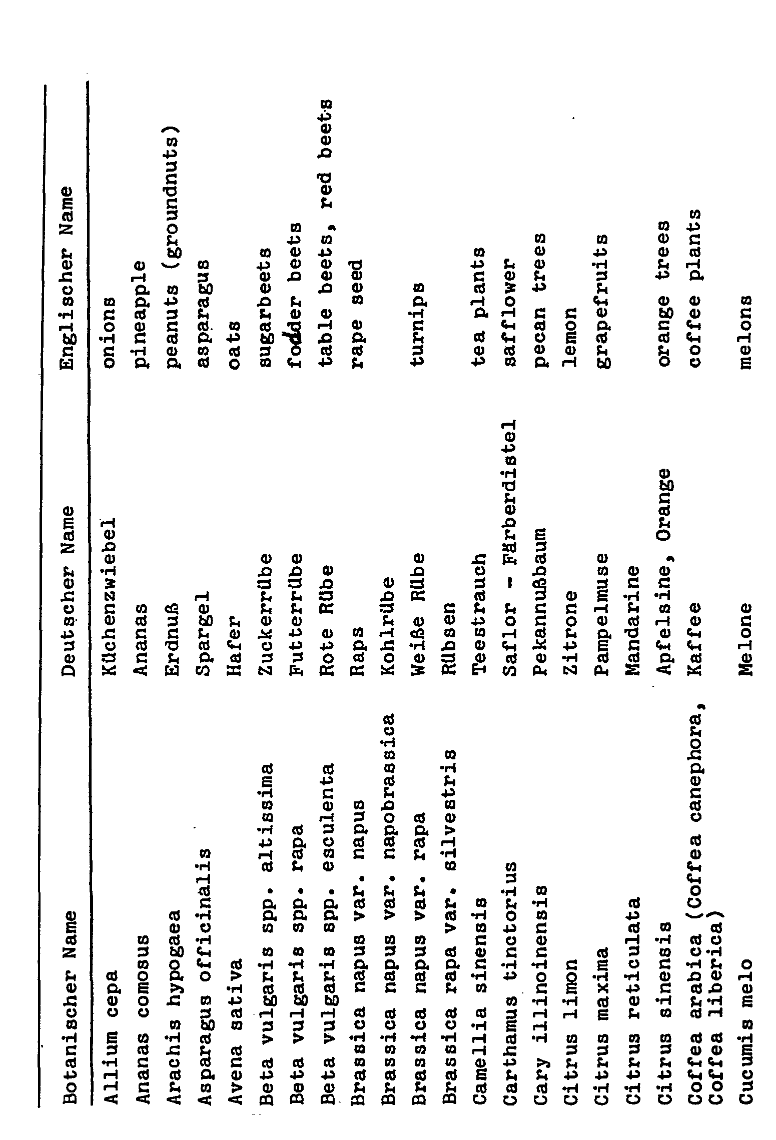

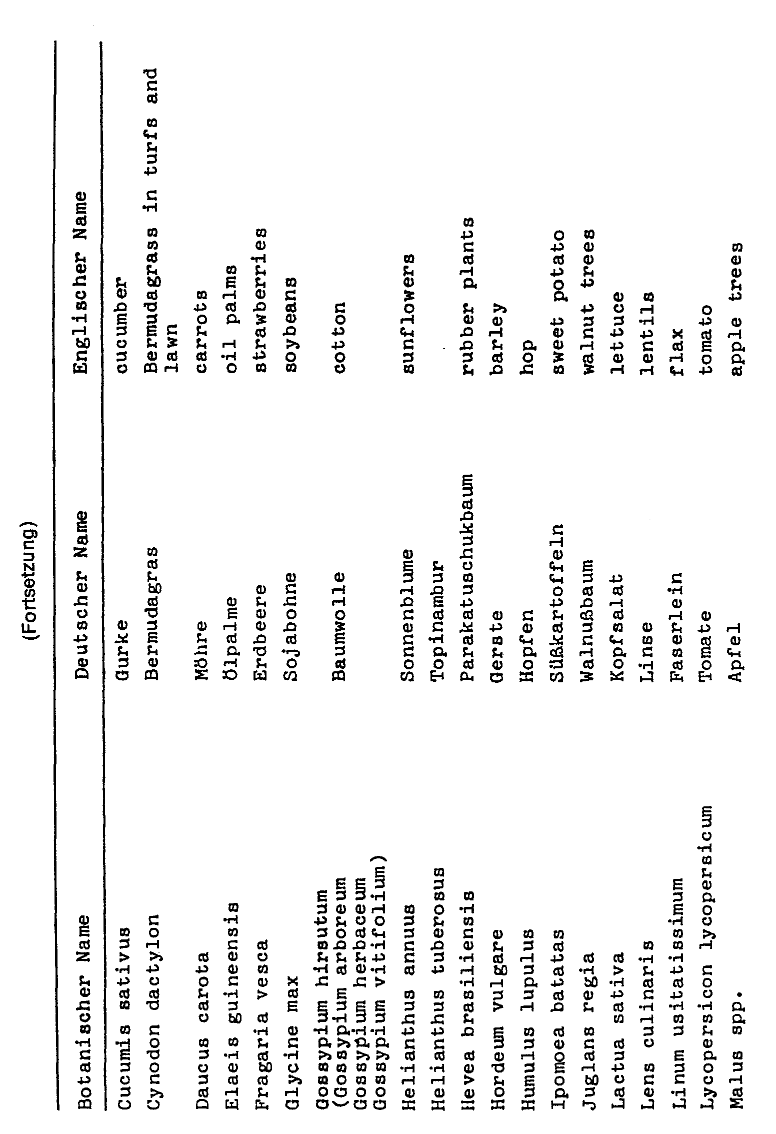

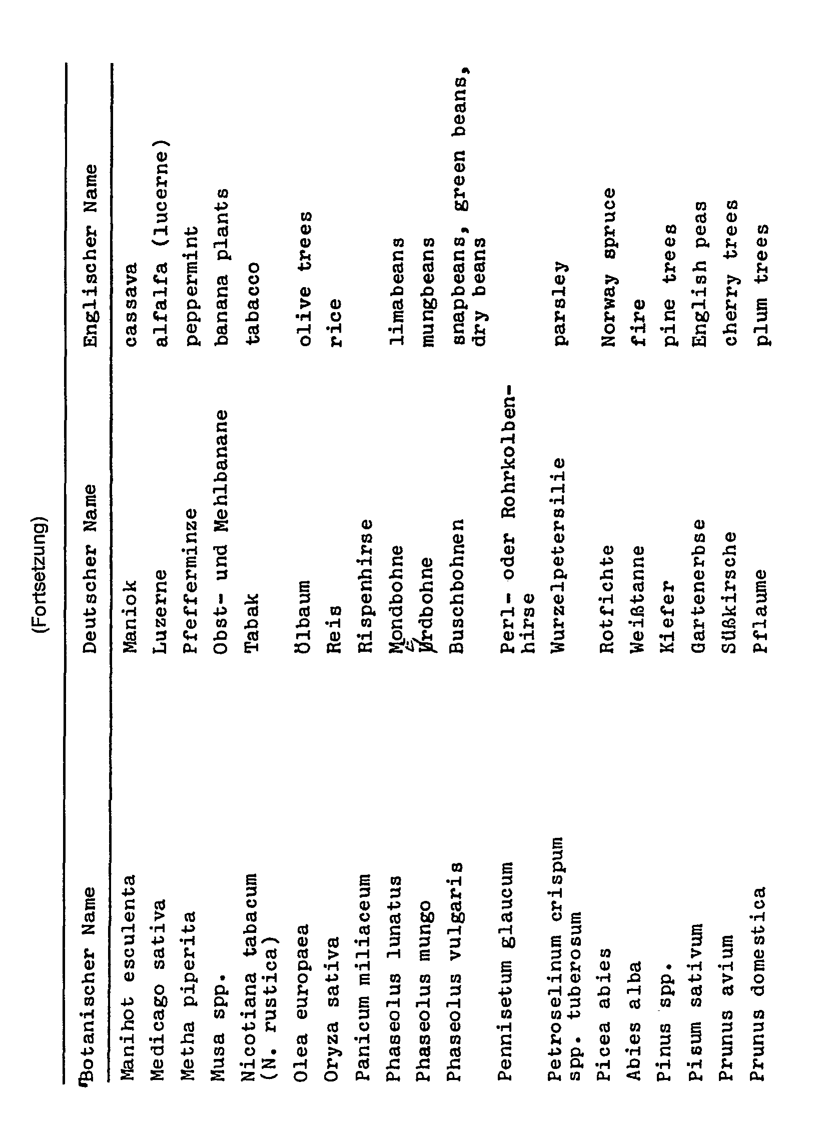

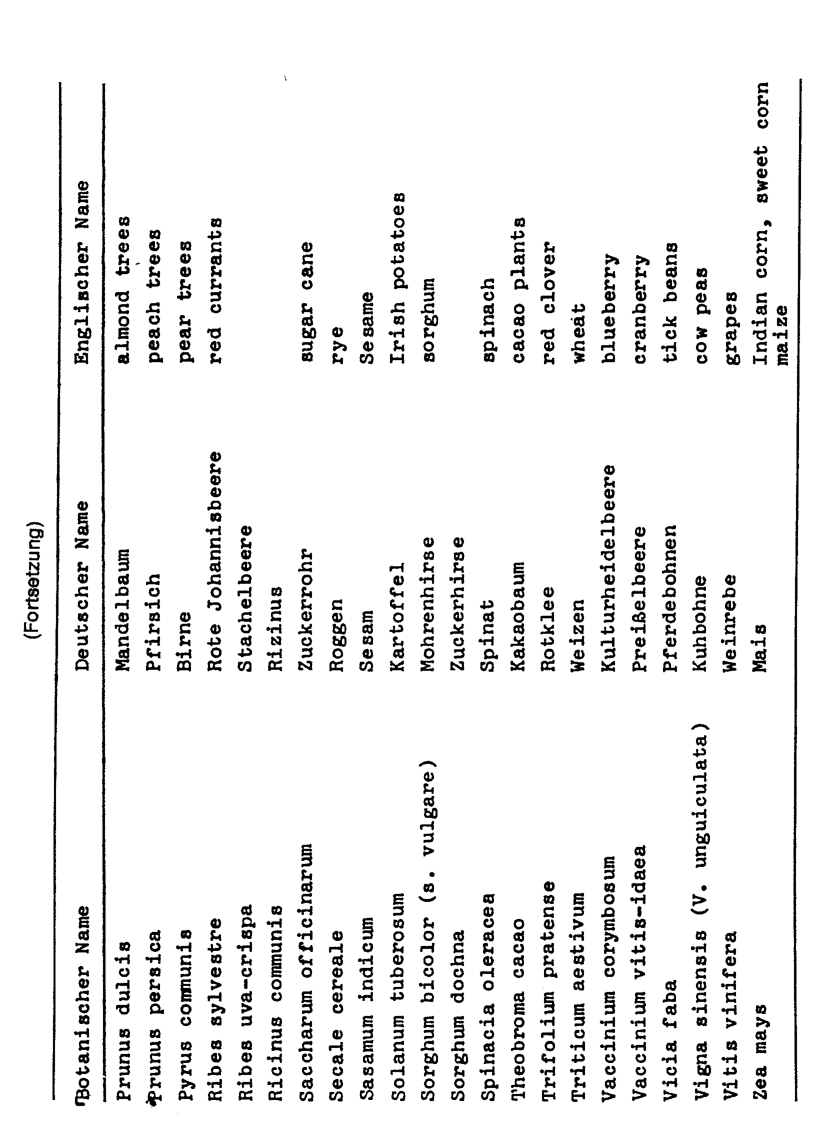

Zur Verbreiterung des Wirkungsspektrums und zur Erzielung synergistischer Effekte können die neuen Urethane sowohl unter sich als auch mit zahlreichen Vertretern anderer herbizider oder wachstumsregulierender Wirkstoffgruppen gemischt und gemeinsam ausgebracht werden. Beispielsweise kommen als Mischungspartner Diazine, 4 H-3,1-Benzoxazinderivate, Benzothiadiazinone, 2,6-Dinitroaniline, N-Phenylcarbamate, Thiolcarbamate, Halogencarbonsäure, Triazine, Amide, Harnstoffe, Diphenylether, Triazinone, Uracile, Benzofuranderivate, Cyclohexan-1,3-dionderivate und andere in Betracht. Eine Reihe von Wirkstoffen, welche zusammen mit den neuen Verbindungen für verschiedenste Anwendungsbereiche sinnvolle Mischungen ergeben, werden beispielhaft aufgeführt :
5-Amino-4-chlor-2-phenyl-3(2H)-pyridazinon
5-Amino-4-brom-2-phenyl-3(2H)-pyridazinon
5-Amino-4-chlor-2-cyclohexyl-3(2H)-pyridazinon
5-Amino-4-brom-2-cyclohexyl-3(2H)-pyridazinon
5-Methylamino-4-chlor-2-(3.trifluormethylphenyl-3(2H)-pyridazinon
5-Methylamino-4-chlor-2-(3.a,a,ß,ß,-tetrafluorethoxyphenyl)-3(2H)-pyridazinon
5-Dimethylamino-4-chlor-2-phenyl-3(2H)-pyridazinon
4,5-Dimethoxy-2-phenyl-3(2H)-pyridazinon
4,5-Dimethoxy-2-cyclohexyl-3(2H)-pyridazinon
4,5-Dimethoxy-2-(3.trifluormethylphenyl)-3(2H)-pyridazinon
5-Methoxy-4-chlor-2-(3.trifluormethylphenyl)-3(2H)-pyridazinon
5-Amino-4-brom-2-(3.methylphenyl)-3(2H)-pyridazinon
3-(1-Methylethyl)-1H-2,1,3-benzothiadiazin-4(3H)-on-2,2-dioxid und Salze
3-(1-Methylethyl)-8-chlor-1H-2,1,3-benzothiadiazin-4(3H)-on-2,2-dioxid und Salze
3-(1-Methylethyl)-8-fluor-1H-2,1,3-benzothiadiazin-4(3H)-on-2,2-dioxid und Salze
3-(1-Methylethyl)-8-methyl-1H-2,1,3-benzothiadiazin-4(3H)-on-2,2-dioxid und Salze
1-Methoxymethyl-3-(1-methylethyl-2,1,3-benzothiad iazin-4(3H)-on-2,2-dioxid
1-Methoxymethyl-8-chlor-3-(1-methylethyl)-2,1,3-benzothiadiazin-4(3H)-on-2,2-dioxid
1-Methoxymethyl-8-fluor-3-(1-methylethyl)-2,1,3-benzothiadiazin-4(3H)-on-2,2-dioxid
1-Cyan-8-chlor-3-(1-methylethyl)-2,1,3-benzothiadiazin-4(3H)-on-2,2-dioxid
1-Cyan-8-fluor-3-(1-methylethyl)-2,1,3-benzothiad iazin-4(3H)-on-2,2-dioxid
1-Cyan-8-methyl-3-(1-methylethyl)-2,1,3-benzothiadiazin-4(3H)-on-2,2-dioxid
1-Cyan-3-(1-methylethyl)-2,1,3-benzothiadiazin-4(3H)-on-2,2-dioxid
1-Azidomethyl-3-(1-methylethyl)-2,1,3-benzothiadiazin-4(3H)-on-2,2-dioxid
3-(1-Methylethyl)-1H-pyridino-[3,2-e]-2,1,3-thiadiazin-(4)-on-2,2-dioxid
N-(1-Ethylpropyl)-2,6-dinitro-3,4-dimethylanilin
N-(1-Methyläthyl)-N-ethyl-2,6-dinitro-4-trifluormethylanilin
N-n.Propyl-N-β-chlorethyl-2,6-dinitro-4-trifluormethylanilin
N-n.Propyl-N-cyclopropylmethyl-2,6-dinitro-4-trifluormethylanilin
N-Bis-(n.propyl)-2,6-dinitro-3-amino-4-trifluormethylanilin
N-Bis-(n.propyl)-2,6-dinitro-4-methyl-anilin
N-Bis-(n.propyl)-2,6-dinitro-4-methylsulfonyl-anilin
N-Bis-(n.propyl)-2,6-dinitro-4-aminosulfonyl-anilin
Bis-(ß-chlorethyl)-2,6-dinitro-4-methyl-anilin
N-Ethyl-N-(2-methylallyl)-2,6-dinitro-4-trifluormethylanilin
N-Methylcarbaminsäure-3,4-dichlorbenzylester
N-Methylcarbaminsäure-2,6-di-tert. butyl-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester
N-3-Chlorphenylcarbaminsäure-butin-1-yl-3-ester
N-3-Chlorphenylcarbaminsäure-4-chlor-butin-2-yl-1-este
N-3,4-Dichlorphenylcarbaminsäure-methylester
N-(4-Amino-benzolsulfonyl)-carbaminsäure-methylester
O-(N-Phenylcarbamoyl)-propanonoxim
N-Ethyl-2-(phenylcarbamoyl)-oxypropionsäureamid
3'-N-Isopropyl-carbamoyloxy-propionsäureanilid
Ethyl-N-(3-(N'-phenylcarbamoyloxy)-phenyl)-carbamat
Methyl-N-(3-(N'-methyl-N'-phenylcarbamoyloxy)-phenyl)-carbamat
Isopropyl-N-(3-(N'-ethyl-N'-phenylcarbamoyloxy)-phenyl)-carbamat
Methyl-N-(3-(N'-3-methylphenylcarbamoyloxy)-phenyl)-carbamat
Methyl-N-(3-(N'-4-fluorphenylcarbamoyloxy)-phenyl)-carbamat
Methyl-N-(3-(N'-3-chlor-4-fluorphenylcarbamoyloxy)-phenyl)-carbamat
Ethyl-N-(3-(N'-3-chlor-4-fluorphenylcarbamoyloxy)-phenyl)-carbamat
Ethyl-N-(3-(N'-3,4-difluorphenylcarbamoyloxy)-phenyl)-carbamat
Methyl-N-(3-(N'-3,4-difluorphenylcarbamoyloxy)-phenyl)-carbamat
N-3-(4-Fluorphenoxycarbonylamino)-phenylcarbaminsäuremethylester
N-3-(2-Methylphenoxycarbonylamino)-phenylcarbaminsäureethylester
N-3-(4-Fluorphenoxycarbonylamino)-phenylthiolcarbaminsäuremethylester
N-3-(2,4,5-Trimethylphenoxycarbonylamino)-phenylthiolcarbaminsäure-methylester
N-3-(Phenoxycarbonylamino)-phenylthiolcarbaminsäuremethylester
N,N-Diethyl-thiolcarbaminsäure-p-chlorbenzylester
N.N-Di-n-propyl-thiolcarbaminsäure-ethylester
N,N-Di-n-propyl-thiolcarbaminsäure-n-propylester
N.N-Di-isopropyl-thiolcarbaminsäure-2,3-dichlorallylester
N,N-Di-isopropyl-thiolcarbaminsäure-2,3,3-trichlorallylester
N,N-Di-isopropyl-thiolcarbaminsäure-3-methyl-5-isoxazolylmethylester
N,N-Di-isopropyl-thiolcarbaminsäure-3-ethy1-5-isoxazolylmethylester
N,N-Di-sec.butyl-thiolcarbaminsäure-ethylester
N,N-Di-sec.butyl-thiolcarbaminsäure-benzylester
N-Ethyl-N-cyclohexyl-thiocarbaminsäure-ethylester
N-Ethyl-N-bicyclo-[2,2,1 ]-heptyl-thiolcarbaminsäure-ethylester
S-(2,3-Dichlorallyl)-(2,2,4-trimethyl-azetidin)-1-carbothiolat
S-(2,3,3-Trichlorallyl)-(2,2,4-trimethyl-azetidin)-1-carbothiolat
S-Ethyl-hexahydro-1-H-azepin-1-carbothiolat
S-Benzyl-3-methylhexahydro-1-H-azepin-1-carbothiolat
S-Benzyl-2,3-dimethylhexahydro-1-H-azepin-1-carbothiolat
S-Ethyl-3-methylhexahydro-1-H-azepin-1-carbothiolat
N-Ethyl-N-n-butyl-thiolcarbaminsäure-n-propylester
N,N-Dimethyl-dithiocarbaminsäure-2-chlorallylester
N-Methyl-dithiocarbaminsäure-Natriumsalz
Trichloressigsäure-Natriumsalz
α,α-Dichlorpropionsäure-Natriumsalz
a,a-Dichlorbuttersäure-Natriumsalz
a,a,ß,ß-Tetrafluorpropionsäure-Natriumsalz
a-Methyl,a,ß-dichlorpropionsäure-Natriumsalz
α-Chlor-β-(4-chlorphenyl)-propionsäure-methylester
α,β-Dichlor-β-phenylpropionsäure-methylester
Benzamido-oxy-essigsäure
2,3,5-Triiodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Dinatrium-3,6-endoxohexahydro-phthalat
4-Amino-3,5,6-trichlor-picolinsäure (Salze)
2-Cyan-3-(N-methyl-N-phenyl)-amino-acrylsäureethylester
2-[4-(4'-Chlorphenoxy)-phenoxy]-propionsäureisobutylester
2-[4-(2',4'-Dichlorphenoxy)-phenoxy]-propionsäuremethylester
2-[4-(4'-Trifluormethylphenoxy)-phenoxy]-propionsäuremethylester
2-[4-(2'-Chlor-4'-trifluorphenoxy)-phenoxy]-propionsäure-Natriumsalz
2-[4-(3',5'-Dichlorpyridyl-2-oxy)-phenoxy]-propionsäure-Natriumsalz
2-(N-Benzoyl-3,4-dichlorphenylamino)-propionsäureethylester
2-(N-Benzoyl-3-chlor-4-fluorphenylamino)-propionsäuremethylester
2-(N-Benzoyl-3-chlor-4-fluorphenylamino)-propionsäure-isopropylester
2-Chlor-4-ethylamino-6-isopropylamino-1,3,5-triazin
2-Chlor-4-ethylamino-6-(amino-2'-propionitril)-1,3,5-triazin
2-Chlor-4-ethylamino-6-2-methoxypropyl-2-amino-1,3,5-triazin
2-Chlor-4-ethylamino-6-butin-1-yl-2-amino-1,3,5-triazin
2-Chlor-4,6-bisethylamino-1 3,5-triazin
2-Chlor-4,6-bisisopropylamino-1,3,5-triazin
2-Chlor-4-isopropylamino-6-cyclopropylamino-1,3,5-triazin
2-Azido-4-methylamino-6-isopropylamino-1,3,5-triazin
2-Methylthio-4-ethylamino-6-isopropylamino-1,3,5-triazin
2-Methylthio-4-ethylamino-6-tert.butylamino-1,3,5-triazin
2-Methylthio-4,6-bisethylamino-1,3,5-triazin
2-Methylthio-4,6-bisisopropylamino-1,3,5-triazin
2-Methoxy-4-ethylamino-6-isopropylamino-1,3,5-triazin
2-Methoxy-4,6-bisethylamino-1,3,5-triazin
2-Methoxy-4,6-bisisopropylamino-1,3,5-triazin
4-Amino-6-tert.butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert.butyl-3-methylthio-4,5-dihydro-1,2,4-triazin-5-on
1-Methyl-3-cyclohexyl-6-dimethylamino-1,3,5-triazin-2,4-dio
3-tert.Butyl-5-chlor-6-methyluraci I
3-tert.Butyl-5-brom-6-methyluraci I
3-Isopropyl-5-brom-6-methyiuracil
3-sec.Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethyluracil
2-Methyl-4-(3'-trifluormethylphenyl)-tetrahydro-1,2,4-oxadiazin-3,5-dion
2-Methyl-4-(4'-fluorphenyl)-tetrahydro-1,2,4-oxadiazin-3,5-dion
3-Amino-1,2,4-triazol
1-Allyloxy-1-(4-bromphenyl)-2-[1',2',4'-triazolyl-(1')-]-ethan (Salze)
1-(4-Chlorphenoxy-3,3-dimethyl-1(1H-1,2,4-triazol-1-yl)-2-butano
N,N-Diallylchloracetamid
N-Isopropyl-2-chloracetanilid
N-(1-Methyl-propin-2-yl)-2-chloracetanilid
2-Methyl-6-ethyl-N-(propargyl)-2-chloracetanilid
2-Methyl-6-ethyl-N-(ethoxymethyl)-2-chloracetanilid
2-Methyl-6-ethyl-N-(2-methoxy-1-methylethyl)-2-chloracetanilid
2-Methyl-6-ethyl-N-(isopropoxycarbonylethyl)-2-chloracetanilid
2-Methyl-6-ethyl-N-(4-methoxypyrazol-1-yl-methyl)-2-chloracetanilid
2-Methyl-6-ethyl-N-(pyrazol-1-yl-methyl)-2-chloracetanilid
2,6-Dimethyl-N-(pyrazol-1-yl-methyl)-2-chloracetanilid
2,6-Dimethyl-N-(4-methylpyrazol-1-yl-methy1)-2-chloracetanilid
2,6-Dimethyl-N-(1,2,4-triazol-1-yl-methyl)-2-chloracetanilid
2,6-Dimethyl-N-(3,5-dimethylpyrazol-1-yl-methyl)-2-chloracetanilid
2,6-Dimethyl-N-(1,3-dioxolan-2-yl-methyl)-2-chloracetanilid
2,6-Dimethyl-N-(2-methoxyethyl)-2-chloracetanilid
2,6-Dimethyl-N-(isobutoxymethyl)-2-chloracetanilid
2,6-Diethyl-N-(methoxymethy1)-2-chloracetanilid
2,6-Diethyl-N-(n-butoxymethyl)-2-chloracetanilid
2,6-Diethyl-N-(ethoxycarbonylmethyl)-2-chloracetanilid
2,3,6-Trimethyl-N-(pyrazol-1-yl-methyl)-2-chloracetanilid
2,3-Dimethyl-N-(isopropyl)-2-chloracetanilid
2,6-Diethyl-N-(2-n-propoxyethyl)-2-chloracetanilid
2-(2-Methyl-4-chlorphenoxy)-N-methoxy-acetamid
2-(α-Naphtoxy)-N,N-diethylpropionamid
2,2-Diphenyl-N,N-dimethylacetamid
α-(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
5-Acetamido-2,4-dimethyltrifluormethan-sulfonanilid
5-Acetamido-4-methyl-trifluormethan-sulfonanilid
2-Propionyl-amino-4-methyl-5-chlor-thiazol
O-(Methylsulfonyl)-glykolsäure-N-ethoxymethyl-2,6-dimethylanilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
2,6-Dichlorbenzonitril
3,5-Dibrom-4-hydroxy-benzonitril (Salze)
3,5-Diiod-4-hydroxy-benzonitril (Salze)
3,5-Dibrom-4-hydroxy-O-2,4-dinitrophenylbenzaldoxim (Salze)
3,5-Dibrom-4-hydroxy-O-2-cyan-4-nitrophenylbenzaldoxim (Salze)
Pentachlorphenol-Natriumsalz
2,4-Dichlorphenyl-4'-nitrophenylether
2,4,6-Trichlorphenyl-4'-nitrophenylether
2-Fluor-4,6-dichlorphenyl-4'-nitrophenylether
2-Chlor-4-trifluormethylphenyl-4'-nitrophenylether
2,4'-Dinitro-4-trifluormethyl-diphenylether
2,4-Dichlorphenyl-3'-methoxy-4'-nitro-phenylether
2-Chlor-4-trifluormethylphenyl-3'-ethoxy-4'-nitro-phenylether
2-Chlor-4-trifluormethylphenyl-3'-carboxy-4'-nitro-phenylether (Salze)
2,4-Dichlorphenyl-3'-methoxycarbonyl-4'-nitro-phenylether
2-(3,4-Dichlorphenyl)-4-methyl-1,2,4-oxadiazolidin-3,5-dion
2-(3-tert.Butylcarbamoyl-oxyphenyl)-4-methyl-1,2,4-oxadiazolidin-3,5-dion
2-(3-iso-Propylcarbamoyl-oxyphenyl)-4-methyl-1,2,4-oxadiazoIidin-3,5-dion
2-Phenyl-3,1-benzoxazinon-(4)
(4-Bromphenyl)-3,4,5,9,10-pentaazatetracyclo-[5,4,1,0^{2.6},0^{8.11}]-dodeca-3,9-dien
2-Ethoxy-2,3-dihydro-3,3-dimethyl-5-benzofuranyl-methansulfonat
2-Ethoxy-2,3-dihydro-3,3-dimethyl-5-benzofuranyl-dimethylaminosulfonat
2-Ethoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureamid
2-Methyl-4,6-dinitrophenol (Salze, Ester)
2-sec.Butyl-4,6-dinitrophenol (Salze)
2-sec.Butyl-4,6-dinitrophenol-acetat
2-tert.Butyl-4,6-dinitrophenol-acetat
2-tert.Butyl-4,6-dinitrophenol (Salze)
2-tert.Butyl-5-methyl-4,6-dinitrophenol (Salze)
2-tert.Butyl-5-methyl-4,6-dinitrophenol-acetat
2-sec.Amyl-4,6-dinitrophenol (Salze, Ester)
1-(a,a-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-Chlorphenyl)-1-benzoyl-3,3-dimethyl-harnstoff
1-(4-Chlorphenyl)-3,3-dimethyl-harnstoff
1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstaff
1-(3-α,α,β,β-Tetrafluorethoxyphenyl)-3,3-dimethyl-harnstoff
1-(3-tert.-Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4(4'-Chlorphenoxy)-phenyl]-3,3-dimethyl-harnstoff
1-[4(4'-methoxyphenoxy)-phenyl]-3,3-dimethyl-harnstoff
1-Cyclooctyl-3,3-dimethyl-harnstoff
1-(Hexahydro-4,7-methanindan-5-yl)-3,3-dimethyl-harnstoff
1-[1-oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethylharnstoff
Imidazolidin-2-on-1-carbonsäure-iso-butylamid
1,2-Dimethyl-3,5-diphenylpyrazolium-methylsulfat
1,2,4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenyl)-sulfonyl-oxyl]-pyrazol
2,3,5-Trichlor-pyridinol-(4)
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin n
1,1'-Dimethyl-4,4'-dipyridylium-di-(methylsulfat)
1,1'-Di(3,5-dimethylmorpholin-carbonylmethyl)-4,4'-dipyridylium-dichlorid
1,1'-Ethylen-2,2'-dipyridylium-dibromid
3-[1 (N-Ethoxyamino)-propyliden]-6-ethyl-3,4-dihydro-2-H-pyran-2,4-dio
3-[1-(N-Allyloxyamino)-propyliden]-6-ethyl-3,4-dihydro-2-H-pyran-2,4-dionn
2-[1-(N-Allyloxyamino)-propyliden]-5,5-dimethylcyclohexan-1,3-dion(Salze)
2-[1-(N-Allyloxyamino)-butyliden]-5,5-dimethylcyclohexan-1,3-dion (Salze)
2-[1-(N-Allyloxyamino)-butyliden]-5,5-dimethyl-4-methoxycarbonyl-cyclohexan-1,3-dion (Salze)
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichiorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)
α-Naphthoxyessigsäuremethylester
2-(2-Methylphenoxy)-propionsäure (Salze, Ester, Amide)
2-(4-Chlorphenoxy)-propionsäure (Salze, Ester, Amide)
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester)
2,3,6-Trichlorphenyl-essigsäure (Salze, Ester)
4-Chlor-2-oxo-benzothiazolin-3-yl-essigsäure (Salze, Ester)
Gibellerinsäure (Salze)
Dinatrium-methylarsonat
Mononatriumsalz der Methylarsonsäure
N-Phosphon-methyl-glycin (Salze)
N,N-Bis-(phosphonmethyl)-glycin (Salze)
2-Chlorethanphosphonsäure-2-chlorethylester
Ammonium-ethyl-carbamoyl-phosphonat
Di-n-butyl-1-n-butylamino-cyclohexyl-phosphonat
Trithiobutylphosphit
O,O-Diisopropyl-5-(2-benzosulfonylamino-ethyl)-phosphordithioat
2,3-Dihydro-5,6-dimethyl-1,4-dithiin-1,1,4,4-tetraoxid
5-tert.Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,6-dion (Salze)
Bernsteinsäure-mono-N-dimethylhydrazid (Salze)
(2-Chlorethyl)-trimethyl-ammoniumchlorid
(2-Methyl-4-phenylsulfonyl)-trifluormethansulfonanilid
1,1-Dimethyl-4,6-diisopropyl-5-indanylethylketon
Natriumchlorat
Ammoniumrhodanid
Calciumcyanamid
2-Chlor-4-trifluormethylphenyl-3'-ethoxycarbonyl-4'-nitrophenylether
1-(4-Benzyloxyphenyl)-3-methyl-3-methoxyharnstoff
2-[1-(2,5-Dimethylphenyl)-ethylsulfonyl]-pyridin-N-oxid
1-Acetyl-3-anilino-4-methoxycarbonyl-5-methylpyrazol
3-Anilino-4-methoxycarbony1-5-methylpyrazol
3-tert.Butylamino-4-methoxycarbonyl-5-methylpyrazol
N-Benzyl-N-isopropyl-trimethylacetamid
2-[4-(4'-Chlorphenoxymethyl)-phenoxy]-propionsäuremethylester
2-[4-(5'-Brompyridyl-2-oxy)-phenoxy]-propionsäuremethylester
2-[4-(5'-Jodpyridyl-2-oxy)-phenoxy]-propionsäuremethylester
2-[4-(5'-Jodpyridyl-2-oxy)-phenoxy]-propionsäure-n.-butylester
2-Chlor-4-trifluormethylphenyl-3'-(2-fluorethoxy)-4'-nitrophenylether
2-Chlor-4-trifluormethylphenyl-3-(ethoxycarbonyl)-methylthio-4-nitrophenylether
2,4,6-Trichlorphenyl-3-(ethoxycarbonyl)-methylthio-4-nitrophenylether
2-[1-(N-ethoxamino)-butyliden]-5-(2-ethylthiopropyl)-3-hydroxy-cyclohexen-(2)-on-(1) (Salze)
2-[1-(N-ethoxamino)-butyliden]-5-(2-phenylthiopropyl)-3-hydroxy-cyclohexen-(2)-on-(1) (Salze)
4-[4-(4'-Trifluormethyl)-phenoxy]-penten-2-carbonsäureethylester
2-Chlor-4-trifluormethyl-3'-methoxycarbonyl-4'-nitrophenylether
2,4-Dichlorphenyl-3'-carboxy-4'-nitrophenylether (Salze)
4,5-Dimethoxy-2-(3-α,α,β-trifluor-β-bromethoxyphenyl)-3-(2H)-pyridazinon
2,4-Dichlorphenyl-3'-ethoxy-ethoxy-ethoxy-4'-nitrophenylether
2,3-Dihydro-3,3-dimethyl-5-benzofuranyl-ethansulfonat
N-[4-Methoxy-6-methyl-1,3,5-triazin-2-yl-aminocarbonyl]-2-chlorbenzolsulfonamid
1(3-Chlor-4-ethoxyphenyl)-3,3-dimethylharnstoff
2-Methyl-4-Chlorphe_{'}noxy-thioessigsäureethylester
2-Chlor-3,5-dijod-4-acetoxy-piridin
1(-4-[2-(4-Methylphenyl)-äthoxy]-phenyl)-3-methyl-3-methoxyharnstoff

Bei der Prüfung der herbiziden Wirkung bei Vorauflaufanwendung im Gewächshaus bei Aufwandmengen von 3,0 kg Wirkstoff je ha zeigen die neuen Verbindungen Nr. 76, 94, 36, 98 eine bessere Kulturpflanzenverträglichkeit als der bekannte Wirkstoff A.

Bei der Prüfung auf selektive herbizide Wirkung bei Nachauflaufanwendung im Gewächshaus zeigen die Wirkstoffe Nr. 109 bei 0,5, 123 bei 0,5, 90 bei 1,0, 63 bei 0,5 kg/ha eine bessere herbizide Wirkung und vor allem eine bessere Kulturpflanzenverträglichkeit als der bekannte Wirkstoff B bei 0,5 oder 1,0 kg/ha.

Gleichfalls bei der selektiven Unkrautbekämpfung bei Nachauflaufanwendung im Gewächshaus zeigen bei 0,25 kg/ha die Wirkstoffe Nr. 13 und 14 eine bessere herbizide und selektive Wirkung als der bekannte Wirkstoff B bei 0,25 kg/ha.

Ebenfalls bei 1,0 kg Wirkstoff/ha und bei Nachauflaufanwendung im Gewächshaus erbringen die neuen Verbindungen Nr. 108 und 121 eine deutlich bessere herbizide Wirkung als der bekannte Wirkstoff B.

Bei der Prüfung ebenfalls auf selektive herbizide Wirkung bei Nachauflaufanwendung im Gewächshaus zeigt der Wirkstoff Nr. 88 bei 2,0 kg/ha eine bessere Kulturpflanzenverträglichkeit als der bekannte Wirkstoff C.

Bei der Prüfung der herbiziden Wirkung bei Nachauflaufanwendung im Gewächshaus bei einer Aufwandmenge von 2 kg Wirkstoff je ha zeigte die Verbindung 36 eine gute herbizide Wirkung.

Bei der Prüfung der herbiziden Wirkung bei Nachauflaufanwendung im Gewächshaus bei einer Aufwandmenge von 1 kg Wirkstoff je ha zeigten die Verbindungen 109 und 114 eine gute herbizide Wirkung.

Bei der Prüfung der herbiziden Wirkung bei Nachauflaufanwendung im Gewächshaus bei einer Aufwandmenge von 2 kg Wirkstoff je ha zeigten die Verbindungen 47 und 62 eine gute herbizide Wirkung.

Bei der Prüfung der herbiziden Wirkung bei Nachauflaufanwendung im Gewächshaus bei einer Aufwandmenge von 0,5 kg Wirkstoff je ha zeigten die Verbindungen 101, 63 und 107 eine gute herbizide Wirkung.

### (Siehe die Tabelle 1 Seite 27)

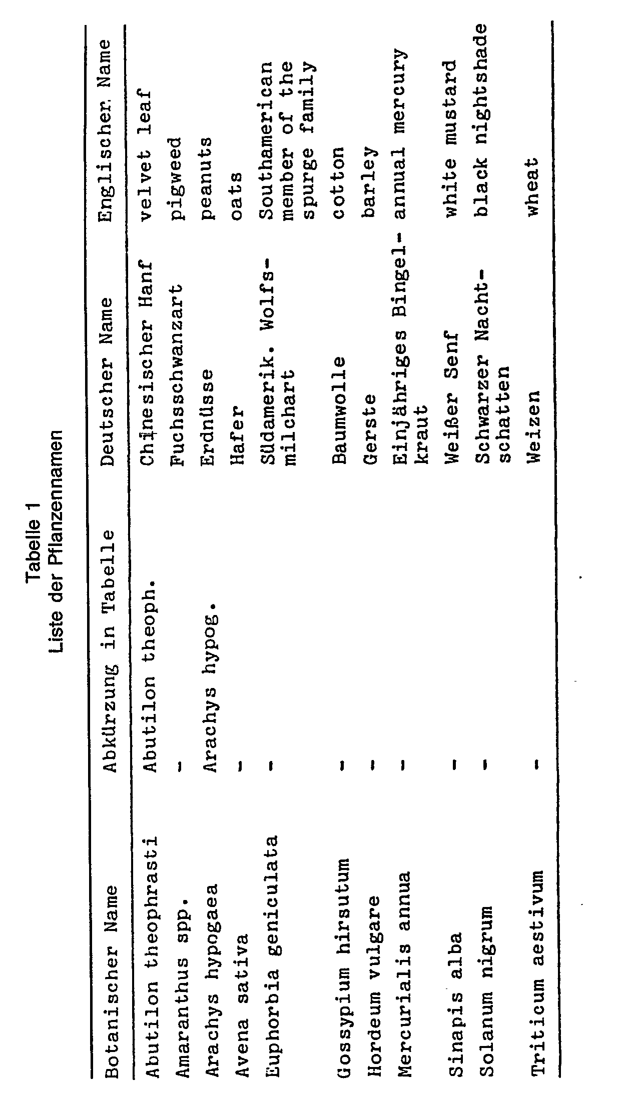

Die neuen Wirkstoffe zeigen eine starke fungitoxische Wirksamkeit gegen phytopathogene Pilze, insbesondere aus der Klasse der Ascomyceten. Folgende Pilze sind beispielsweise zu nennen : Erysiphe graminis an Weizen, Erysiphe cichoriacearum an Gurken, Uncinula necator an Reben, Podospaera leucotricha an Äpfeln.

Bei Verwendung der neuen Verbindungen zum Schutz von Kulturpflanzen enthalten die fungiziden Mittel 0,1 bis 95 % (Gew.-%) Wirkstoff, vorzugsweise 0,5 bis 90 %. Die Aufwandmengen liegen je nach Art des gewünschten Effektes zwischen 0,01 und 3 kg oder mehr Wirkstoff je ha, vorzugsweise jedoch zwischen 0,01 und 1 kg Wirkstoff/ha.

Die Wirkstoffe können auch mit anderen bekannten Fungiziden gemischt werden. In vielen Fällen erhält man dabei auch eine Vergrößerung des fungiziden Wirkungsspektrums ; bei einer Anzahl dieser Fungizidmischungen treten auch synergistische Effekte auf, d. h. die fungizide Wirksamkeit des Kombinationsproduktes ist größer als die der addierten Wirksamkeiten der Einzelkomponenten.

Fungizide, die mit den neuen Verbindungen kombiniert werden können, sind beispielsweise :
Schwefel,
Dithiocarbamate und deren Derivate, wie
Ferridimethyldithiocarbamat,
Zinkdimethyldithiocarbamat,
Mangan-Zink-ethylendiamin-bis-dithiocarbamat und Zinkethylenbisdithiocarbamat,
Tetramethylthiuramdisulfide,
Ammoniak-Komplex von Zink-(N,N-ethylen-bis-dithiocarbamat)
und N,N'-Polyethylen-bis-(thiocarbamoyl)-disulfid,
Zink-(N,N'-propylen-bis-dithiocarbamat), Ammoniak-Komplex von Zink-(N,N'-propylen-bis-dithio-carbamat) und N,N'-Polypropylen-bis-(thiocarbamoyl)-disulfid ;
Nitroderivate, wie
Dinitro-(1-methylheptyl)-phenylcrotonat,
2-sec.-Butyl-4,6-dinitrophenyl-3,3-dimethylacrylat,
2-sec.-Butyl-4,6-dinitrophenyl-isopropylcarbonat;
heterocyclische Substanzen, wie
N-(1,1,2,2-Tetrachlorethylthio)-tetrahydrophthalimid,
N-Trichlormethylthio-tetrahydrophthalimid,
2-Heptadecyl-2-imidazolin-acetat
2,4-Dichlor-6-(o-chloranilino)-s-triazin
O,O-Diäthyl-phthalimidophonothioat
5-Amino-1-(bis-(dimethylamino)-phosphinyl)-3-phenyl-1,2,4-triazol)
2,3-Dicyano-1,4-Dithioaanthrachinon
2-Thio-1,3-dithio-(4,5-b)-chinoxalin
1-(Butylcarbamoyl)-2-benzimidazol-carbaminsäuremethylester
4-(2-Chlorphenylhydrazono)-3-methyl-5-isoxazolon Pyridin-2-thio-l-oxid
8-Hydroxychinolin bzw. dessen Kupfersalz
2,3-Dihydro-5-carboxanilido-6-methyl-1,4-oxathlin-4,4-dioxid
2,3-Dihydro-5-carboxanilido-6-methyl-1,4-oxathiin 2-(Furyl-(2))-benzimidazol
Piperazin-1,4-diylbis-(1-(2,2,2-trichlor-äthyl)-formamid 2-(Thiazolyl-(4)-benzimidazol
5-Butyl-2-dimethylamino-4-hydroxy-6-methyl-pyrimidin Bis-(p-chlorphenyl)-3-pyridinmethanol
1,2-Bis-(3-äthoxycarbonyl-2-thioureido)-benzol
1,2-Bis-(3-methoxycarbonyl-2-thioureido)-benzol
sowie verschiedene Fungizide, wie
Dodecylguanidinacetat
3-(3-(3,5-Dimethyl-2-oxycyclohexyl)-2-hydroxyäthyl)-glutarimid
Hexachlorbenzol
N-Dichlorfluormethylthio-N',N'-dimethyl-N-phenyl-schwefelsäurediamid
2,5-Dimethyl-furan-3-carbonsäureanilid
2-Methyl-benzoesäure-anilid
2-Jod-benzoesäure-aniiid
1-(3,4-Dichloranilino)-1-formylamino-2,2,2-trichloräthan
2,6-Dimethyl-N-tridecyl-morpholin bzw. dessen Salze
2,6-Dimethyl-N-cyclododecyl-morpholin bzw. dessen Salze
1-(4-Chlorphenoxy)-3,3-dimethyl-1-(1H-1,2,4-triazol-1-yl)-2-butanon
1-(4-Chlorphenoxy)-3,3-dimethyl-1-(1H-1,2,4-triazol-1-yl)-2-butanol-(2-Chlorphenyl)-α-(4-chlorphenyl)-5-pyrimidin-methanol.

Für den folgenden Versuch wurde der bekannte Wirkstoff 1-[2-(2,4-Dichlorphenyl)-2-(2-propenyl- oxy)-ethyl]-imidazol als Vergleichsmittel D verwendet :
Wirksamkeit gegen Weizenmehltau
Blätter von in Töpfen gewachsenen Weizenkeimlingen der Sorte « Jubilar werden mit wäßrigen Emulsionen aus 80 % (Gew.-%) Wirkstoff und 20 % Emulgiermittel besprüht und nach dem Antrocknen des Spritzbelages mit Oidien (Sporen) des Weizenmehltaus (Erysiphe graminis var. tritici) bestäubt. Die Versuchspflanzen werden anschließend im Gewächshaus bei Temperaturen zwischen 20 und 22 °C und 75 bis 80 % relativer Luftfeuchtigkeit aufgestellt. Nach 10 Tagen wird das Ausmaß der Mehltauentwicklung ermittelt. Das Ergebnis des Versuches zeigt, daß die Wirkstoffe 35, 36, 62, 87, 101, 108, 109 und 121 eine bessere fungizide Wirksamkeit aus der bekannte Wirkstoff D haben.

## Patentansprüche (Patentansprüche für folgende(n) Vertragsstaat(en) : BE, CH, DE, FR, GB, IT, LI, NL, SE)

1. Urethan der allgemeinen Formel 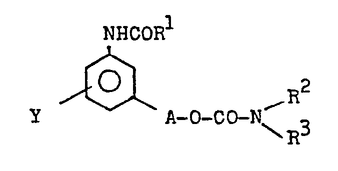 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR⁵R⁴, SR⁴, S0₂R⁴, OSO₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylest bedeuten oder einer der beiden Substituenten die für R² genannten Bedeutungen hat.

2. Fungizid, enthaltend ein Urethan der allgemeinen Formel 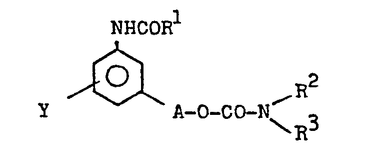 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, ^{NHCOOR4, NHC}ONR^{SR4,} COOR^{4,} CONR⁵R⁴, SR⁴, S0₂R⁴, OS0₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

3. Fungizid, enthaltend einen festen oder flüssigen Trägerstoff und ein Urethan der allgemeinen Formel 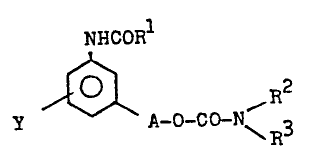 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR^{S}R⁴, COOR⁴, CONR⁵R⁴, SR⁴, S0₂R⁴, OS0₂R⁴, COR⁴, SO₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

4. Verfahren zur Herstellung eines Fungizids, dadurch gekennzeichnet, daß man einen festen oder flüssigen Trägerstoff vermischt mit einem Urethan der allgemeinen Formel 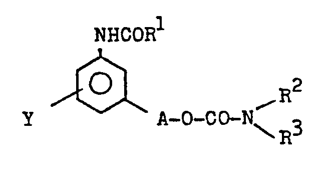 in der
R' gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH--COR⁴, NHCOOR⁴, NHCONR⁵R⁴, COOR⁴, CONR⁵R⁴, SR⁴, S0₂R⁴, OS0₂R⁴, COR⁴, SO₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

5. Verfahren zur Bekämpfung von Pilzen, dadurch gekennzeichnet, daß man die Pilze oder die vor Pilzbefall zu schützenden Gegenstände behandelt mit einem Urethan der allgemeinen Formel 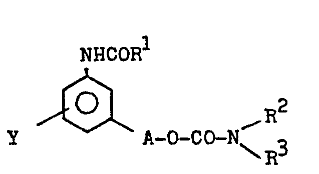 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, _{NHCOOR}⁴, NHCONR⁵R⁴, COOR⁴, CONR⁵R⁴, SR⁴, S0₂R⁴, OSO₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

6. Verfahren zur Herstellung eines Urethans der allgemeinen Formel 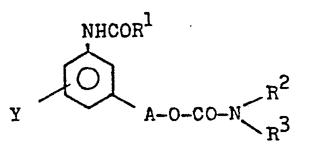 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet.
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH--COR⁴, NHCOOR⁴, NHCONR⁵R⁴, COOR⁴, CONR⁵R⁴, SR⁴, SO₂R⁴, OSO₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat, dadurch gekennzeichnet, daß man eine Hydroxyverbindung der allgemeinen Formel 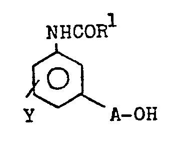 in der R¹, Y und A die obengenannten Bedeutungen haben, mit einem Isocyanat der Formel 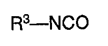 in der R³ die oben genannten Bedeutungen hat, gegebenenfalls in einem inerten Lösungsmittel gegebenenfalls in Gegenwart eines Katalysators bei 0 bis 150 °C umsetzt.

7. Herbizid, enthaltend ein Urethan der allgemeinen Formel 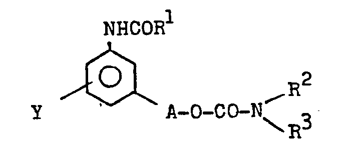 in der
R' gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halo'gen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR⁵R⁴, SR⁴, S0₂R⁴, OS0₂R⁴, COR⁴, SO₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

## Patentansprüche (Patentansprüche für folgende(n) Vertragsstaat(en) : AT)

1. Fungizid, enthaltend ein Urethan der allgemeinen Formel 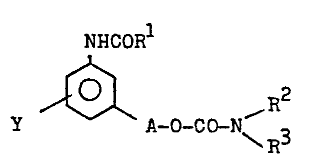 in der
R' gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH--COR⁴, NHCOOR⁴, NHCONR⁵R⁴, COOR⁴, CONR^{S}R⁴, SR⁴, S0₂R⁴, OS0₂R⁴, COR⁴, S0_{2NR}⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

2. Fungizid, enthaltend einen festen oder flüssigen Trägerstoff und ein Urethan der allgemeinen Formel 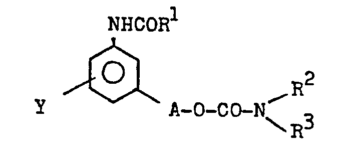 in der
R' gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR^{S}R⁴, SR⁴, S0₂R⁴, OS0₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

3. Verfahren zur Herstellung eines Fungizids, dadurch gekennzeichnet, daß man einen festen oder flüssigen Trägerstoff vermischt mit einem Urethan der allgemeinen Formel 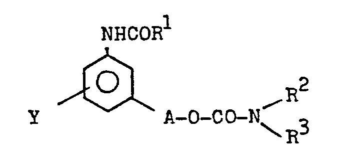 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl; Alkoxyalkyl, Cycloalkyl, Halogen, Alkoxy, Halogenalkoxy, Nitro, Aryl, Aryloxy, Thiocyanato, Cyano, NH-COR⁴, _{NHCOOR}⁴, _{NHCONR}⁵R⁴, COOR⁴, CONR^{S}R⁴, SR⁴, S0₂R⁴, OSO₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutung hat.

4. Verfahren zur Bekämpfung von Pilzen, dadurch gekennzeichnet, daß man die Pilze oder die vor Pilzbefall zu schützenden Gegenstände behandelt mit einem Urethan der allgemeinen Formel 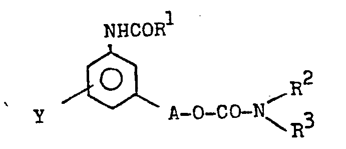 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
eR³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR⁵R⁴, SR⁴, S0₂R⁴, OS0₂R⁴, COR⁴, S0₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

5. Verfahren zur Herstellung eines Urethans der allgemeinen Formel 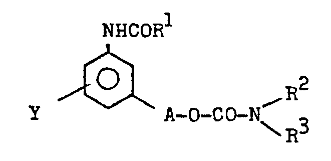 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR^{S}R⁴, SR⁴, S0₂R⁴, OS02R4, COR⁴, SO₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat, dadurch gekennzeichnet, daß man eine Hydroxyverbindung der allgemeinen Formel 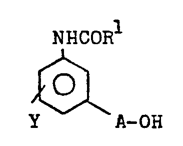 in der R^{l}, Y und A die obengenannten Bedeutungen haben, mit einem Isocyanat der Formel
R³-NCO
in der R³ die oben genannten Bedeutungen hat, gegebenenfalls in einen inerten Lösungsmittel gegebenenfalls in Gegenwart eines Katalysators bei 0 bis 150 °C umsetzt.

6. Herbizid, enthaltend ein Urethan der allgemeinen Formel 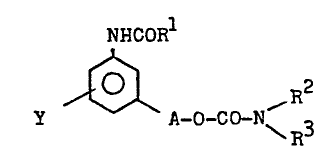 in der
R¹ gegebenenfalls durch Halogen oder Alkoxy oder Alkoxycarbonyl oder Cyan substituiertes Alkyl, Cycloalkyl, Alkenyl oder Alkinyl oder Alkoxy, Cycloalkoxy, Alkenyloxy, Alkinyloxy, Cyanalkoxy, Halogenalkoxy, Alkylthio, Alkenylthio oder Alkinylthio bedeutet,
Y Wasserstoff, Alkyl, Halogen, Alkoxy oder Halogenalkyl bedeutet,
A einen gegebenenfalls durch Alkyl substituierten Alkylenrest bedeutet,
R² Wasserstoff, Alkyl, Alkoxyalkyl, Halogenalkyl, gegebenenfalls durch Alkyl oder Halogen substituiertes Benzyl,
R³ unsubstituiertes Alkyl oder durch Halogen oder Alkoxy oder gegebenenfalls substituiertes Aryl substituiertes Alkyl, gegebenenfalls durch Halogen substituiertes Alkenyl, gegebenenfalls durch Halogen oder Alkoxy substituiertes Alkinyl, gegebenenfalls durch Alkyl substituiertes Cycloalkyl, Phenyl, ein- oder mehrfach substituiertes Phenyl bedeutet, mit den Substituenten Alkyl, Halogenalkyl, Alkoxyalkyl, Cycloalkyl, Halogen, Alkoxy, Halogenalkoxy, Nitro, Aryl, Aryloxy, Thiocyanato, Cyano, NH-COR⁴, NHCOOR⁴, NHCONR⁵R⁴, COOR⁴, CONR^{S}R⁴, SR⁴, S0₂R⁴, OSO₂R⁴, COR⁴, SO₂NR⁵R⁴, wobei R⁴ und R⁵ jeweils unabhängig voneinander Wasserstoff oder einen gegebenenfalls ein- oder mehrfach substituierten Arylrest bedeuten oder einer der beiden Substituenten die für R² genannten Bedeutungen hat.

## Claims (Claims for the following Contracting State(s) : BE, CH, DE, FR, GB, IT, U, NL, SE)

1. A urethane of the general formula 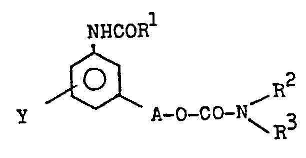 where
R¹ is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 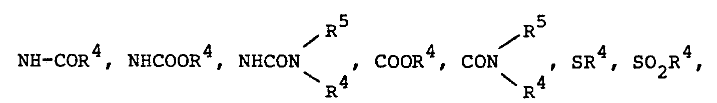 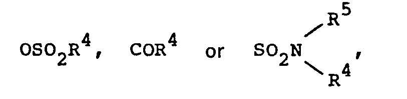 where R⁴ and R⁵ each independently of one another are hydrogen or unsubstituted, monosubstituted or polysubstituted aryl, or one of R⁴ and R⁵ has one of the other meanings given for R².

2. A fungicide containing a urethane of the general formula 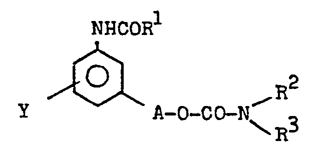 where
R¹ is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 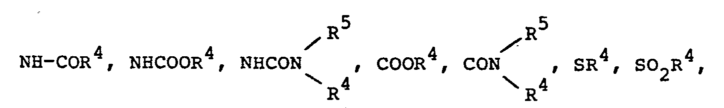 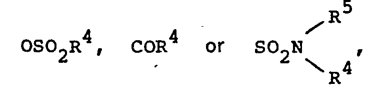 where R⁴ and R⁵ each independently of one another are hydrogen or unsubstituted, monosubstituted or polysubstituted aryl, or one of R⁴ and R⁵ has one of the other meanings given for R².

3. A fungicide containing a solid or liquid carrier and a urethane of the general formula 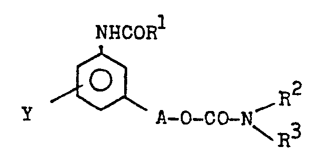 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 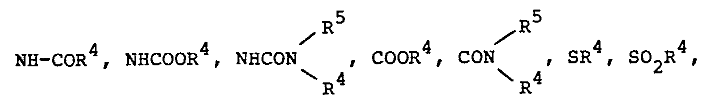 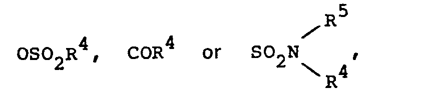 where R⁴ and R⁵ each independently of one another are hydrogen or unsubstituted, monosubstituted or polysubstituted aryl, or one of R⁴ and R⁵ has one of the other meanings given for R².

4. A process for manufacturing a fungicide, wherein a solid or liquid carrier is mixed a urethane of the general formula 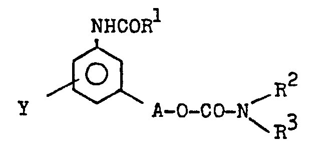 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, of unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 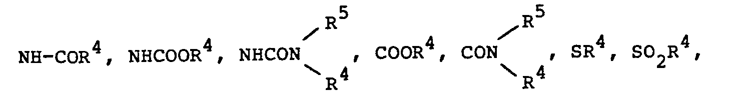 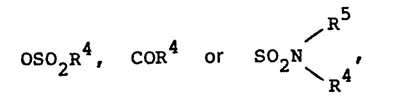 where R⁴ and R⁵ each independently of one another are hydrogen or unsubstituted, monosubstituted or polysubstituted aryl, or one of R⁴ and R⁵ has one of the other meanings given for R^{2.}

5. A process for combating fungi, wherein the fungi or the objects to be protected against fungus attack are treated with a urethane of the general formula 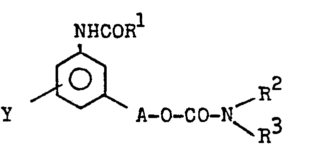 where
R¹ is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 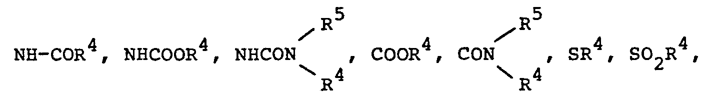 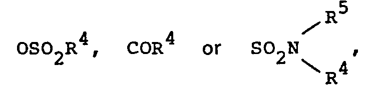 where R⁴ and R⁵ each independently of one another are hydrogen or unsubstituted, monosubstituted or polysubstituted aryl, or one of R⁴ and R⁵ has one of the other meanings given for R².

6. A process for the manufacture of a urethane of the general formula 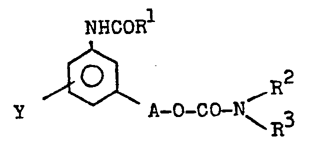 where
R¹ is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycoalkyl, halogen, alkoxy, haloalkoxy, nitro, aryl, aryloxy, thiocyanato, cyano 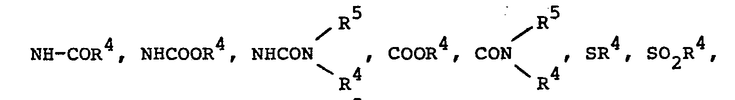 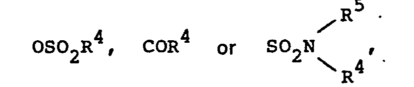 where R⁴ and R⁵ each independently of one another are hydrogen or unsubstituted, monosubstituted or polysubstituted aryl, or one of R⁴ and R⁵ has one of the other meanings given for R², wherein a hydroxy compound of the general formula 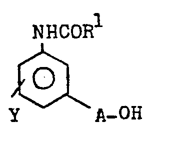 where R', Y and A have the above meanings, is reacted with an isocyanate of the formula
_{R}³⁻NCO,
where R³ has the above meanings, if desired in an inert solvent and in the presence or absence of a catalyst, at from 0° to 150°C.

7. A herbicide containing a urethane of the general formula 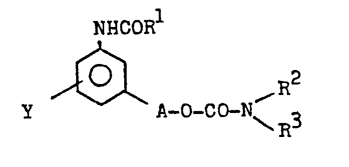 where
R' is unsubstituted or halogen-, alkoxy-, alkoxy-carbonyl- or cyano-substituted alkyl, cycloalkyl. alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy. haloalkoxy, nitro, aryl, aryloxy, thiocyanato, cyano, 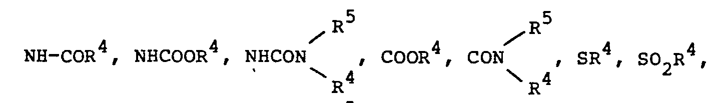 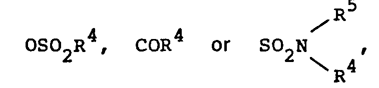 where R⁴ and R⁵ each independently of one another are hydrogen or unsubstituted, monosubstituted or polysubstituted aryl, or one of R⁴ and R⁵ has one of the other meanings given for R².

## Claims (Claims for the following Contracting State(s) : AT)

1. A fungicide containing a urethane of the general formula 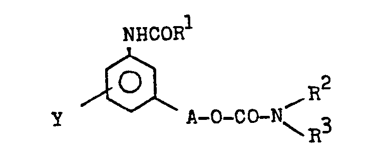 where
R¹ is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkylnyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 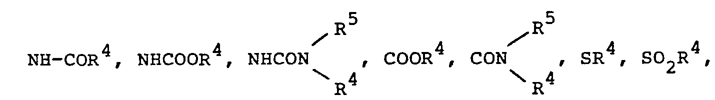 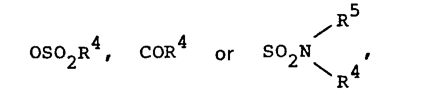 where R⁴ and R⁵ each independently of one another are hydrogen or unsubstituted, monosubstituted or polysubstituted aryl, or one of R⁴ and R⁵ has one of the other meanings given for R².

2. A fungicide containing a solid or liquid carrier and a urethane of the general formula 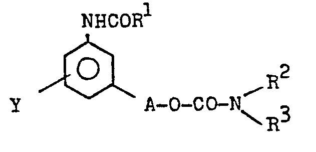 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 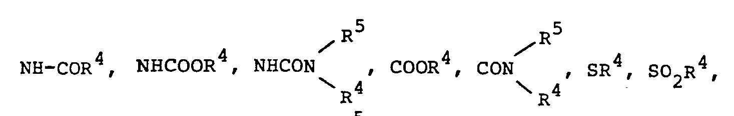 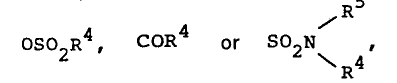 where R⁴ and R⁵ each independently of one another are hydrogen or unsubstituted, monosubstituted or polysubstituted aryl, or one of R⁴ and R^{s} has one of the other meanings given for R².

3. A process for manufacturing a fungicide, wherein a solid or liquid carrier is mixed with a urethane of the general formula 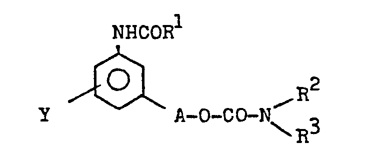 where
R' is unsubstituted or halogen-, alkoxy-, alkoxy-carbonyl- or cyano-substituted alkyl, cycloalkyl, alkenyl or alkynyl, or alkoxy, cyclaolkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 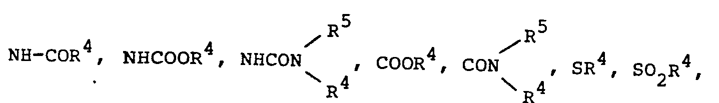 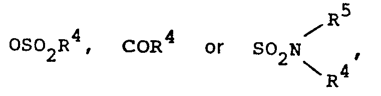 where R⁴ and R⁵ each independently of one another are hydrogen or unsubstituted, monosubstituted or polysubstituted aryl, or one of R⁴ and R⁵ has one of the other meanings given for R².

4. A process for combating fungi, wherein the fungi or the objects to be protected against fungus attack are treated with a urethane of the general formula 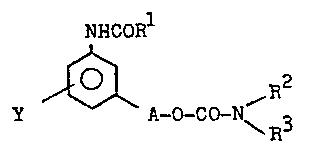 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 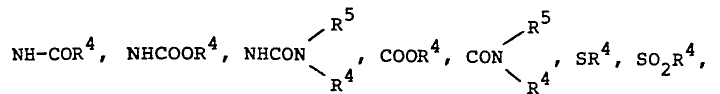 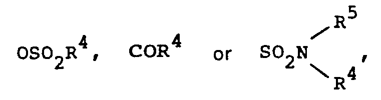 where R⁴ and R⁵ each independently of one another are hydrogen or unsubstituted, monosubstituted or polysubstituted aryl, or one of R⁴ and R⁵ has one of the other meanings given for R².

5. A process for the manufacture of a urethane of the general formula 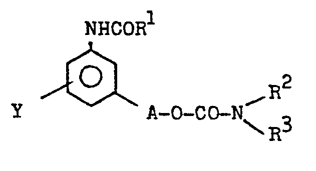 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
X is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano 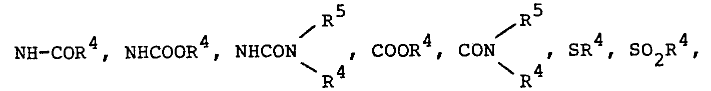 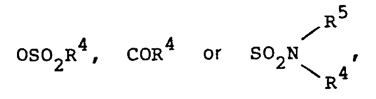 where R⁴ and R⁵ each independently of one another are hydrogen or unsubstituted, monosubstituted or polysubstituted aryl, or one of R⁴ and R⁵ has one of the other meanings given for R², wherein a hydroxy compound of the general formula 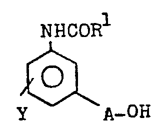 where R^{l}, Y and A have the above meanings, is reacted with an isocyanate of the formula
_{R}³⁻NCO,
where R³ has the above meanings, if desired in an intert solvent and in the presence or absence of a catalyst, at from 0° to 150°C.

6. A herbicide containing a urethane of the general formula 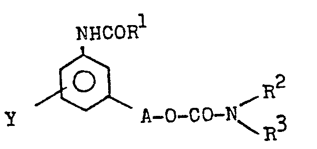 where
R' is unsubstituted or halogen-, alkoxy-, alkoxy-carbonyl- or cyano-substituted alkyl, cycloalkyl, alkenyl or alkynyl, or alkoxy, cycloalkoxy, alkenyloxy, alkynyloxy, cyanoalkoxy, haloalkoxy, alkylthio, alkenylthio or alkynylthio,
Y is hydrogen, alkyl, halogen, alkoxy, or haloalkyl,
A is unsubstituted or alkyl-substituted alkylene,
R² is hydrogen, alkyl, alkoxyalkyl, haloalkyl, or unsubstituted or alkyl- or halogen-substituted benzyl,
R³ is alkyl which is unsubstituted or substituted by halogen or by alkoxy or by unsubstituted or substituted aryl, or is unsubstituted or halogen-substituted alkenyl, unsubstituted or halogen- or alkoxy- substituted alkynyl, or unsubstituted or alkyl-substituted cycloalkyl, phenyl or monosubstituted or polysubstituted phenyl, the substituents being alkyl, haloalkyl, alkoxyalkyl, cycloalkyl, halogen, alkoxy, haloalkoxy, nitro, aryl, aryloxy, thiocyanato, cyano, 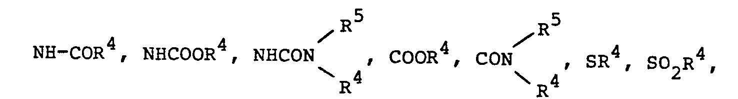 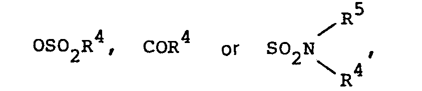 where R⁴ and R⁵ each independently of one another are hydrogen or unsubstituted, monosubstituted or polysubstituted aryl, or one of R⁴ and R⁵ has one of the other meanings given for R^{2.}

## Revendications (Revendications pour l'(les) Etat(s) contractant(s) suivant(s) : BE, CH, DE, FR, GB, IT, LI, NL, SE)

1. Uréthane de formule générale 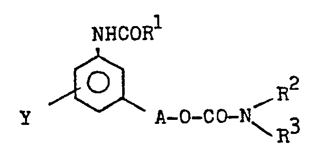 dans laquelle
R' représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle, éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanato, cyano, NH-COR⁴, NHCOOR⁴, NHCONR⁵R^{4,} COOR⁴, CONR⁵R⁴, SR⁴, S0₂R⁴, OS0₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

2. Fongicide, contenant un uréthane de formule générale 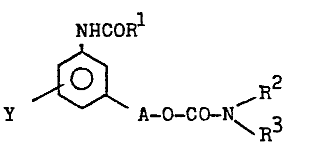 dans laquelle
R' représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle, éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR4, NHCONR⁵R⁴, COOR⁴, CONR⁵R⁴, SR⁴, S0₂R⁴, OS0₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

3. Fongicide, contenant un support solide ou liquide et un uréthane de formule générale 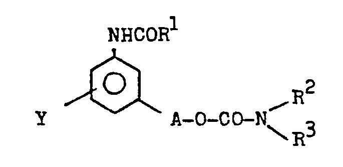 dans laquelle
R¹ représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR⁴, NHCONRSR⁴, COOR⁴, CONR⁵R⁴, SR⁴, S0₂R⁴, OS0₂R⁴, COR⁴, S0₂NR⁵R⁴, R⁴ et R⁵ chacun, indépendamment l'un de l'autre, représentant hydrogène ou un reste aryle éventuellement substitué une ou plusieurs fois, ou un des deux substituants qui a les significations indiquées pour R^{2.}

4. Procédé de préparation d'un fongicide, caractérisé par le fait qu'on mélange un support solide ou liquide avec un uréthane de formule générale 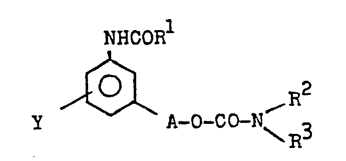 dans laquelle
R¹ représente, éventuellement substitués par halogène ou alcoxy ou alcoxycarbonyle ou cyano, un alkyle, cycloalkyle, acényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR⁴, NHCONR⁵R⁴, COOR⁴, CONR⁵R⁴, SR⁴, S0₂R⁴, OSO₂R⁴, COR⁴, S0₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

5. Procédé de lutte contre les champignons, caractérisé par le fait qu'on traite les champignons ou les objets à protéger contre l'attaque des champignons, avec un uréthane de formule générale 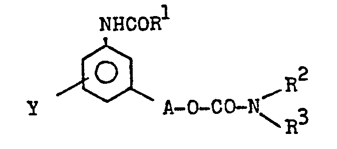 dans laquelle
R¹ représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle, éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanato, cyano, NH-COR⁴, NHÇOOR⁴, NHCONR⁵R⁴, COOR⁴, CONR⁵R⁴, SR⁴, SO₂R⁴, OSO₂R⁴, COR⁴, SO₂NR⁵R⁴, R⁴ et R⁵ chacun. indépendamment l'un de l'autre, représentant hydrogène ou un reste aryle, éventuellement substitué une ou plusieurs fois, ou un des deux substituants qui a les significations indiquées pour R².

6. Procédé de préparation d'un uréthane de formule générale 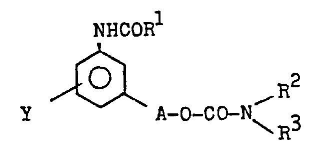 dans laquelle
R¹ représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanato, cyano, NH-OR⁴, NHCOOR⁴, NHCONR⁵R⁴, COOR⁴, CONR⁵R⁴, SR⁴, SO₂R⁴, OSO₂R⁴, COR⁴, SO₂NR⁵R⁴. R⁴ et R⁵ chacun, indépendamment l'un de l'autre, représentant hydrogène ou un reste aryle, éventuellement substitué une ou plusieurs fois, ou un des deux substituants qui a les significations indiquées pour R², caractérisé par le fait qu'on fait réagir à 0 à 150 °C, éventuellement dans un solvant inerte, éventuellement en présence d'un catalyseur, un composé hydroxy de formule générale 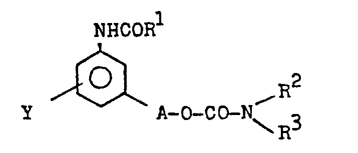 dans laquelle R', Y et A ont les significations données plus haut, avec un isocyanate de formule
_{R}^{3}NCO
dans laquelle R³ a les significations données ci-dessus.

7. Herbicide, contenant un uréthane de formule générale 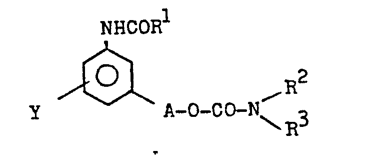 dans laquelle
R' représente, éventuellement substitués par halogène ou alcoxy ou alcoxycarbonyle ou cyano, un aₗₖyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle, éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR⁴. NHCONR⁵R⁴, COOR⁴, CONR⁵R⁴, SR⁴, S0₂R⁴, OS0₂R⁴, COR⁴, S0₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R^{2.}

## Revendications (Revendications pour l'(les) Etat(s) contractant(s) suivant(s) : AT)

1. Fongicide, contenant un uréthane de formule générale 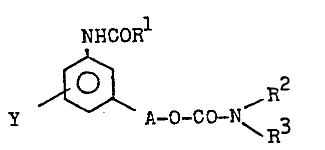 dans laquelle
R' représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un akyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH--COR⁴, NHCOOR⁴, NHCONR⁵R⁴, COOR⁴, CONR⁵R⁴, SR⁴, SO₂R⁴, OSO₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

2. Fongicide, contenant un support solide ou liquide et un uréthane de formule générale 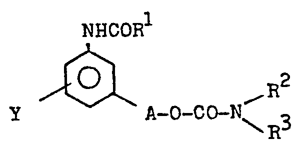 dans laquelle
R' représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH--COR⁴, NHCOOR⁴, NHCONR⁵R⁴, COOR⁴, CONR⁵R⁴, SR⁴, SO2R4, OSO₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

3. Procédé de préparation d'un fongicide, caractérisé par le fait qu'on mélange un support solide ou liquide avec un uréthane de formule générale 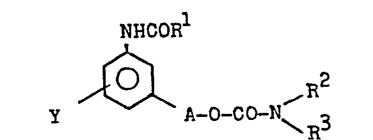 dans laquelle
R' représente, éventuellement substitué par halogène ou alcoxy ou alcoxycarbonyle ou cyano. un alkyle, cycloalkyle, acényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle
R² représente benzyle, substitué par hydrogène, alkyle, alcoxyalkyle, halogénalkyle, éventuellement par élkyle ou halogène,
R³ représente un alkyle non substitué, ou un alkyle substitué par halogène ou alcoxy ou aryle. éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR⁴, NHCONR⁵R⁴, COOR⁴, CONR⁵R⁴, SR⁴, S0₂R⁴, OS0₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

4. Procédé de lutte contre les champignons, caractérisé par le fait qu'on traite les champignons ou les objets à protéger contre l'attaque des champignons, avec un uréthane de formule générale 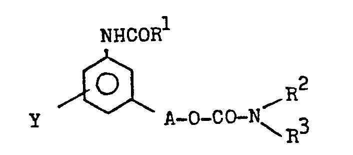 dans laquelle
R¹ représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanato, cyano, NH-COR⁴, NHCOOR⁴, NHCONR⁵R⁴. COOR⁴, CONR⁵R⁴, SR⁴, S0₂R⁴, OS0₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².

5. Procédé de préparation d'un uréthane de formule générale 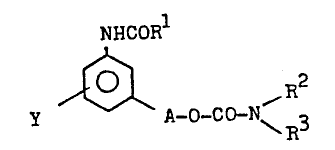 dans laquelle
R' représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanato, cyano, NH―COR⁴. NHCOOR⁴, NHCONR⁵R⁴, COOR⁴, CONR⁵R⁴, SR⁴, S0₂R⁴, OS0₂R⁴, COR⁴, SO₂NR⁵R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R², caractérisé par le fait qu'on fait réagir à 0 à 150 °C, éventuellement dans un solvant inerte, éventuellement en présence d'un catalyseur, un composé hydroxy de formule générale 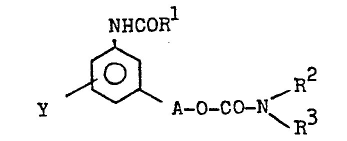 dans laquelle R¹, Y et A ont les significations données plus haut, avec un isocyanate de formule
_{R}³⁻NCO
dans laquelle R³ a les significations données ci-dessus.

6. Herbicide, contenant un uréthane de formule générale 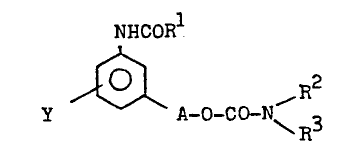 dans laquelle
R¹ représente, éventuellement substitués par halogène ou alcoxy ou alcoxycarbonyle ou cyano, un alkyle, cycloalkyle, alcényle ou alkinyle ou alcoxy, cycloalcoxy, alcényloxy, alkinyloxy, cyanalcoxy, halogénoalcoxy, alkylthio, alcénylthio ou alkinylthio,
Y représente hydrogène, alkyle, halogène, alcoxy ou halogénoalkyle,
A un reste alkylène, éventuellement substitué par alkyle,
R² représente benzyle, substitué par hydrogène, alkyle, alcoxyalkyle, halogénalkyle, éventuellement par alkyle ou halogène,
R³ représente un alkyle non substitué, ou un alkyle substitué par halogène ou alcoxy ou aryle, éventuellement substitué, alcényle, éventuellement substitué par halogène, alkinyle, éventuellement substitué par halogène ou alcoxy, cycloalkyle, éventuellement substitué par alkyle, phényle, phényle, substitué une ou plusieurs fois, avec les substituants alkyle, halogénalkyle, alcoxyalkyle, cycloalkyle, halogène, alcoxy, halogénalcoxy, nitro, aryle, aryloxy, thiocyanate, cyano, NH-COR⁴, NHCOOR⁴, _{NHCONR}⁵R⁴, COOR⁴, CONR⁵R⁴, SR⁴, S0₂R⁴, OS0₂R⁴, COR⁴, S0₂NR^{S}R⁴, R⁴ et R⁵ chacun, indépendamment l'un de l'autre, représentant hydrogène ou un reste aryle, éventuellement substitué une ou plusieurs fois, ou un des deux substituants qui a les significations indiquées pour R².
